# EUROPEAN PATENT APPLICATION

(11) **EP 3 886 485 A1**
(43) Date of publication of application: **29.09.2021**
(21) Application number: 19899970.8
(22) Date of filing: 05.12.2019
(51) Int. Cl.: H04W 24/10

(54) **CHANNEL STATE INFORMATION (CSI) REPORTING CONFIGURATION METHOD AND COMMUNICATION APPARATUS**

(30) Priority: 21.12.2018 CN 201811571623
(71) Applicant: Huawei Technologies Co., Ltd., Longgang District Shenzhen, Guangdong 518129 (CN)
(72) Inventor: JIN, Huangping, Shenzhen, Guangdong 518129 (CN); SHI, Hongzhe, Shenzhen, Guangdong 518129 (CN); ZHONG, Zhimeng, Shenzhen, Guangdong 518129 (CN); YIN, Haifan, Shenzhen, Guangdong 518129 (CN); BI, Xiaoyan, Shenzhen, Guangdong 518129 (CN)
(74) Representative: Pfenning, Meinig & Partner mbB
(86) International application number: PCT/CN2019/123159
(87) International publication number: WO 2020/125422

(57) **Abstract**

This application provides a method for configuring channel state information CSI reporting and a communication apparatus. The method includes: A terminal device receives configuration information for CSI reporting, where the configuration information for the CSI reporting is associated with configuration information of a first reference signal and configuration information of a second reference signal, the second reference signal is used for measuring an uplink channel, and the first reference signal is used for measuring a downlink channel. The terminal device performs channel measurement based on the first reference signal and the second reference signal, and feeds back CSI. By using uplink and downlink channel reciprocity, the terminal device may not need to feed back information with reciprocity, for example, an angle and a delay, so that feedback overheads of the terminal device are reduced.

## Description

This application claims priority to Chinese Patent Application No. 201811571623.9, filed with the Chinese Patent Office on December 21, 2018 and entitled "METHOD FOR CONFIGURING CHANNEL STATE INFORMATION CSI REPORTING AND COMMUNICATION APPARATUS", which is incorporated herein by reference in its entirety.

### TECHNICAL FIELD

This application relates to the field of wireless communication, and more specifically, to a method for configuring channel state information CSI reporting and a communication apparatus.

### BACKGROUND

In a massive multiple-input multiple-output (massive multiple-input multiple-output, Massive MIMO) technology, a network device may reduce interference between a plurality of users and interference between a plurality of signal flows of a same user through precoding. This helps improve signal quality, implement spatial multiplexing, and improve spectrum utilization.

For example, a terminal device may determine a precoding matrix based on downlink channel measurement, and expects to enable, through feedback, the network device to obtain a precoding matrix that is the same as or similar to the precoding matrix determined by the terminal device. Specifically, the terminal device needs to perform channel estimation and measurement on a pilot of each subband, and then search for a precoding matrix indicator (precoding matrix indicator, PMI) component that needs to be fed back for each subband. Particularly, for some high-precision codebooks such as a type II (type II) codebook, singular value decomposition (singular value decomposition, SVD) needs to be performed once on each subband.

However, such a feedback mode leads to relatively high feedback overheads.

### SUMMARY

This application provides a method for configuring channel state information CSI reporting and a communication apparatus, to reduce feedback overheads.

According to a first aspect, a method for configuring channel state information CSI reporting is provided. The method may be performed by a terminal device, or may be performed by a chip disposed in a terminal device.

The method includes: The terminal device receives configuration information for CSI reporting, where the configuration information for the CSI reporting is associated with configuration information of a first reference signal and configuration information of a second reference signal, the second reference signal is used for measuring an uplink channel, and the first reference signal is used for measuring a downlink channel.

The terminal device performs channel measurement based on the first reference signal and the second reference signal, and feeds back CSI.

According to a second aspect, a method for configuring channel state information CSI reporting is provided. The method may be performed by a network device, or may be performed by a chip disposed in a network device.

The method includes: The network device configures a configuration for CSI reporting, where the configuration for the CSI reporting is associated with configuration information of a first reference signal and configuration information of a second reference signal, the second reference signal is used for measuring an uplink channel, and the first reference signal is used for measuring a downlink channel.

The network device sends configuration information for the CSI reporting.

Based on the foregoing technical solution, the configuration information (for example, a CSI reporting setting) for the CSI reporting is associated with configuration information of an uplink reference signal, so that the network device can precode a downlink reference signal based on information (for example, an angle and a delay) that is determined through uplink channel measurement and that is with reciprocity, and the terminal device can measure a downlink channel based on a precoded reference signal. Because the network device precodes the reference signal based on the angle and the delay with reciprocity between an uplink channel and a downlink channel, information about the downlink channel detected by the terminal device is information without reciprocity. Therefore, the terminal device may not need to feed back information with reciprocity (for example, an angle and a delay), so that feedback overheads of the terminal device are greatly reduced. In addition, a process of measuring the downlink channel by the terminal device is simplified by using reciprocity between the uplink and the downlink channel, to reduce calculation complexity of the terminal device in a channel measurement process.

According to a third aspect, a method for configuring channel state information CSI reporting is provided. The method may be performed by a terminal device, or may be performed by a chip disposed in a terminal device.

The method includes: A terminal device receives configuration information for CSI reporting, where the configuration information for the CSI reporting is associated with configuration information of a first reference signal, the configuration information of the first reference signal is associated with a second reference signal, the second reference signal is used for measuring an uplink channel, and the first reference signal is used for measuring a downlink channel.

The terminal device performs channel measurement based on the first reference signal and the second reference signal, and feeds back CSI.

According to a fourth aspect, a method for configuring channel state information CSI reporting is provided. The method may be performed by a network device, or may be performed by a chip disposed in a network device.

The method includes: A network device configures a configuration of CSI reporting, where the configuration for the CSI reporting is associated with configuration information of a first reference signal, the configuration information of the first reference signal is associated with a second reference signal, the second reference signal is used for measuring an uplink channel, and the first reference signal is used for measuring a downlink channel.

The network device sends configuration information for the CSI reporting.

Based on the foregoing technical solution, configuration information of an uplink reference signal is associated with configuration information of an uplink reference signal, so that the network device can precode a downlink reference signal based on information (for example, an angle and a delay) that is determined through uplink channel measurement and that is with reciprocity, and the terminal device can measure a downlink channel based on a precoded reference signal. Because the network device precodes the reference signal based on the angle and the delay with reciprocity between an uplink channel and a downlink channel, information about the downlink channel detected by the terminal device is information without reciprocity. Therefore, the terminal device may not need to feed back information with reciprocity (for example, an angle and a delay), so that feedback overheads of the terminal device are greatly reduced. In addition, the process of measuring the downlink channel by the terminal device is simplified by using reciprocity between the uplink and the downlink channel, to reduce calculation complexity of the terminal device in a channel measurement process.

With reference to the third aspect or the fourth aspect, in some implementations, the configuration information of the first reference signal is at least one of a CSI resource setting CSI resource setting, a first reference resource set, and a first reference signal resource, where the CSI resource setting includes at least one first reference resource set, and the first reference resource set includes at least one first reference signal resource.

With reference to the third aspect or the fourth aspect, in some implementations, that the configuration information of the first reference signal is associated with a second reference signal includes: The configuration information of the first reference signal is associated with an identity ID of the second reference signal.

Based on the foregoing technical solutions, the configuration information of the first reference signal is associated with the identity (identity, ID) of the second reference signal. For example, the ID of the associated second reference signal is configured in the configuration information of the first reference signal.

According to a fifth aspect, a channel state information CSI sending method is provided. The method may be performed by a terminal device, or may be performed by a chip disposed in a terminal device.

The method includes: A terminal device sends a second reference signal used for measuring an uplink channel; and
the terminal device receives a first reference signal, where the first reference signal is a reference signal obtained by a network device by processing channel information, and the channel information is obtained by the network device through uplink channel measurement based on the second reference signal; the terminal device measures a downlink channel based on the first reference signal, to obtain a channel state of the downlink channel; and the terminal device sends CSI based on the channel state of the downlink channel.

According to a sixth aspect, a channel state information CSI receiving method is provided. The method may be performed by a network device, or may be performed by a chip disposed in a network device.

The method includes: A network device receives a second reference signal used for measuring an uplink channel;
the network device sends a first reference signal, where the first reference signal is a reference signal obtained by the network device by processing channel information, and the channel information is obtained by the network device through uplink channel measurement based on the second reference signal; and the network device receives CSI, where the CSI is determined by the terminal device through downlink channel measurement based on the first reference signal.

Based on the foregoing technical solution, the network device can precode a downlink reference signal based on information (for example, an angle and a delay) that is determined through uplink channel measurement and that is with reciprocity, and the terminal device can measure a downlink channel based on a precoded reference signal. Because the network device precodes the reference signal based on the angle and the delay with reciprocity between an uplink channel and a downlink channel, information about the downlink channel detected by the terminal device is information without reciprocity. Therefore, the terminal device may not need to feed back information with reciprocity (for example, an angle and a delay), so that feedback overheads of the terminal device are greatly reduced. In addition, the process of measuring the downlink channel by the terminal device is simplified by using reciprocity between the uplink and the downlink channel, to reduce calculation complexity of the terminal device in a channel measurement process.

With reference to the fifth aspect or the sixth aspect, in some implementations, the channel information includes angle information or delay information.

With reference to the first aspect to the sixth aspect, in some implementations, that the terminal device performs channel measurement based on the first reference signal and the second reference signal, and feeds back CSI includes: The terminal device sends the second reference signal based on the configuration information of the second reference signal; the terminal device receives the first reference signal based on the configuration information of the first reference signal, where the first reference signal is a reference signal obtained by the network device based on processing of information, and the information is obtained by the network device through uplink channel measurement based on the second reference signal; and the terminal device performs channel measurement based on the first reference signal, and feeds back the CSI.

Based on the foregoing technical solutions, the process of measuring the downlink channel by the terminal device is simplified by using reciprocity between the uplink and the downlink channel, to reduce calculation complexity of the terminal device in a channel measurement process.

With reference to the first aspect to the sixth aspect, in some implementations, a precoding matrix of the first reference signal is obtained through calculation based on the second reference signal.

Based on the foregoing technical features, the network device obtains a channel feature with reciprocity, for example, an angle and a delay, through uplink channel measurement. The feature with reciprocity is delivered by using a weight of a downlink reference signal (for example, denoted as a first reference signal). Because the network device precodes the reference signal based on the angle and the delay with reciprocity between the uplink channel and the downlink channel, the terminal device is unaware of the feature with reciprocity. This simplifies a process of measuring the downlink channel by the terminal device.

With reference to the first aspect to the sixth aspect, in some implementations, the second reference signal is periodic, and the first reference signal is periodic, aperiodic, or semi-persistent.

With reference to the first aspect to the sixth aspect, in some implementations, the second reference signal is semi-persistent, and the first reference signal is aperiodic or semi-persistent.

With reference to the first aspect to the sixth aspect, in some implementations, the second reference signal is aperiodic, and the first reference signal is aperiodic.

With reference to the first aspect to the sixth aspect, in some implementations, both the first reference signal and the second reference signal are semi-persistent, and the terminal device receives first signaling sent by the network device, where the first signaling is used to activate the first reference signal and the second reference signal; and the terminal device receives second signaling sent by the network device, where the second signaling is used to deactivate the first reference signal and the second reference signal.

Based on the foregoing technical solution, when the first reference signal and the second reference signal need to be activated by using signaling, the first reference signal and the second reference signal may be activated by using one piece of signaling. When the first reference signal and the second reference signal need to be deactivated by using signaling, the first reference signal and the second reference signal may be activated or deactivated by using one piece of signaling, so that signaling overheads can be reduced.

With reference to the first aspect to the sixth aspect, in some implementations, the CSI reporting, the first reference signal, and the second reference signal are aperiodic, the terminal device receives third signaling sent by the network device, where the third signaling is used to notify the terminal device to report the CSI, the network device to send the first reference signal, and the terminal device to send the second reference signal.

Based on the foregoing technical solution, when the first reference signal, the second reference signal and the CSI reporting need to be activated by using signaling, the first reference signal and the second reference signal may be activated by using one piece of signaling. When the first reference signal and the second reference signal need to be deactivated by using signaling, the first reference signal, the second reference signal, and the CSI reporting may be activated or deactivated by using one piece of signaling, so that signaling overheads can be reduced.

With reference to the first aspect to the sixth aspect, in some implementations, the terminal device sends the second reference signal before receiving the first reference signal; or the terminal device sends the second reference signal when receiving the first reference signal.

With reference to the first aspect to the sixth aspect, in some implementations, there is predetermined duration between that the terminal device receives the first reference signal and that the terminal device sends the second reference signal, and the predetermined duration is determined based on a calculating capability of the network device, or is preset.

With reference to the first aspect to the sixth aspect, in some implementations, the preset duration is set to different values for different subcarrier spacings.

With reference to the first aspect to the sixth aspect, in some implementations, the configuration information for the CSI reporting includes codebook configuration information, and the codebook configuration information is used to indicate a feedback mode of the CSI to the terminal device.

With reference to the first aspect to the sixth aspect, in some implementations, the first reference signal is a channel state information reference signal (channel state information reference signal, CSI-RS), or the second reference signal is any one of the following: a sounding reference signal (sounding reference signal, SRS), a Doppler tracking reference signal (doppler tracking reference signal, DT-RS), a phase-tracking reference signal (phase-tracking reference signal, PT-RS).

It should be understood that the foregoing descriptions are merely examples. Any downlink reference signal or uplink reference signal may be used in this application.

According to a seventh aspect, a communication apparatus is provided, and includes each module or unit configured to perform the method according to any possible implementation of the first aspect, the third aspect, or the fifth aspect.

According to an eighth aspect, a communication apparatus is provided. The communication apparatus includes a processor. The processor is coupled to a memory, and may be configured to execute instructions in the memory, to implement the method according to any possible implementation of the first aspect, the third aspect, or the fifth aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip disposed in a terminal device. When the communication apparatus is the chip disposed in the terminal device, the communication interface may be an input/output interface.

Optionally, the transceiver may be a transceiver circuit. Optionally, the input/output interface may be an input/output circuit.

According to a ninth aspect, a communication apparatus is provided, and includes each module or unit configured to perform the method according to any possible implementation of the second aspect, the fourth aspect, or the sixth aspect.

According to a tenth aspect, a communication apparatus is provided, and includes a processor. The processor is coupled to a memory, and may be configured to execute instructions in the memory, to implement the method according to any possible implementation of the second aspect, the fourth aspect, or the sixth aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in a network device. When the communication apparatus is the chip disposed in the network device, the communication interface may be an input/output interface.

Optionally, the transceiver may be a transceiver circuit. Optionally, the input/output interface may be an input/output circuit.

According to an eleventh aspect, a processor is provided. The processor includes an input circuit, an output circuit, and a processing circuit. The processing circuit is configured to: receive a signal by using the input circuit, and transmit a signal by using the output circuit, so that the processor performs the method in any one of the first aspect, the third aspect, the fifth aspect, or the possible implementations of the first aspect, the third aspect, or the fifth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in this embodiment of this application.

According to a twelfth aspect, a processor is provided, and includes an input circuit, an output circuit, and a processing circuit. The processing circuit is configured to: receive a signal by using the input circuit, and transmit a signal by using the output circuit, so that the processor performs the method in any one of the second aspect, the fourth aspect, the sixth aspect, or the possible implementations of the second aspect, the fourth aspect, or the sixth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in this embodiment of this application.

According to a thirteenth aspect, a processing apparatus is provided, and includes a processor and a memory. The processor is configured to: read instructions stored in the memory, receive a signal via a receiver, and transmit a signal via a transmitter, to perform the method in any one of the first aspect, the third aspect, the fifth aspect, or the possible implementations of the first aspect, the third aspect, or the fifth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read only memory, ROM). The memory and the processor may be integrated into one chip, or may be disposed in different chips. A type of the memory and a manner in which the memory and the processor are disposed are not limited in the embodiments of this application.

It should be understood that a related data exchange process such as sending configuration information used to indicate CSI reporting may be a process of outputting the information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the thirteenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a fourteenth aspect, a processing apparatus is provided, and includes a processor and a memory. The processor is configured to: read instructions stored in the memory, receive a signal via a receiver, and transmit a signal via a transmitter, to perform the method in any one of the second aspect, the fourth aspect, the sixth aspect, or the possible implementations of the second aspect, the fourth aspect, or the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read only memory, ROM). The memory and the processor may be integrated into one chip, or may be disposed in different chips. A type of the memory and a manner in which the memory and the processor are disposed are not limited in the embodiments of this application.

It should be understood that a related data exchange process such as sending configuration information for CSI reporting may be a process of outputting the information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the fourteenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a fifteenth aspect, a computer program product is provided. The computer program product includes a computer program (which may also be referred to as code or instructions). When the computer program is run, a computer is enabled to perform the method in any one of the first aspect, the third aspect, the fifth aspect, or the possible implementations of the first aspect, the third aspect, or the fifth aspect.

According to a sixteenth aspect, a computer program product is provided. The computer program product includes a computer program (which may also be referred to as code or instructions), and when the computer program is run, a computer is enabled to perform the method in any one of the second aspect, the fourth aspect, the sixth aspect, or the possible implementations of the second aspect, the fourth aspect, or the sixth aspect.

According to a seventeenth aspect, a computer-readable medium is provided. The computer-readable medium stores a computer program (which may also be referred to as code or instructions), and when the computer program is run on a computer, the computer is enabled to perform the method in any one of the first aspect, the third aspect, the fifth aspect, or the possible implementations of the first aspect, the third aspect, or the fifth aspect.

According to an eighteenth aspect, a computer-readable medium is provided. The computer-readable medium stores a computer program (which may also be referred to as code or instructions). When the computer program is run on a computer, the computer is enabled to perform the method in any one of the second aspect, the fourth aspect, the sixth aspect, or the possible implementations of the second aspect, the fourth aspect, or the sixth aspect.

According to a nineteenth aspect, a communication system is provided, and includes the foregoing network device and the foregoing terminal device.

### BRIEF DESCRIPTION OF DRAWINGS

FIG. 1 is a schematic diagram of a communication system applicable to embodiments of this application;
FIG. 2 is a schematic diagram of a timing behavior when a network device configures to-be-transmitted CSI-RS information;
FIG. 3 is a schematic interaction diagram of a method for configuring a channel state information reporting according to an embodiment of this application;
FIG. 4 is a schematic diagram of a method for configuring channel state information reporting applicable to an embodiment of this application;
FIG. 5 is another schematic diagram of a method for configuring channel state information reporting applicable to an embodiment of this application;
FIG. 6 is a schematic interaction diagram of sending channel state information according to an embodiment of this application;
FIG. 7 is a schematic block diagram of a communication apparatus according to an embodiment of this application;
FIG. 8 is a schematic structural diagram of a terminal device according to an embodiment of this application; and
FIG. 9 is a schematic structural diagram of a network device according to an embodiment of this application.

### DESCRIPTION OF EMBODIMENTS

The following describes technical solutions of this application with reference to the accompanying drawings.

The technical solutions in embodiments of this application may be applied to various communication systems such as a global system for mobile communications (global system of mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (NR) system.

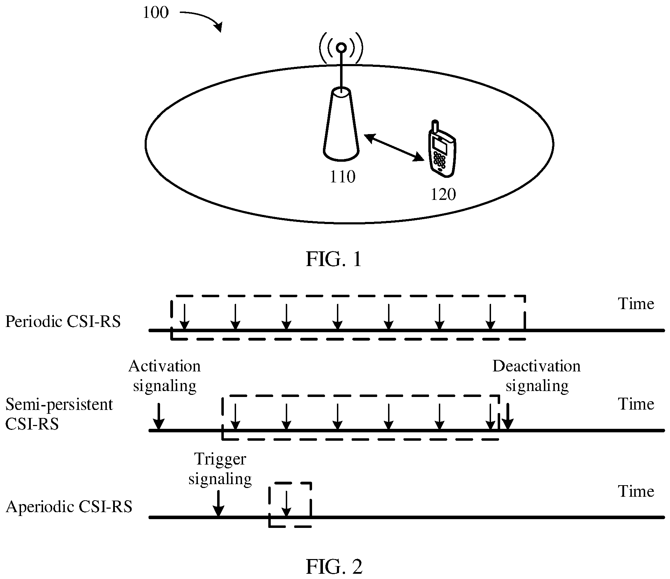

To facilitate understanding of the embodiments of this application, a communication system applicable to the embodiments of this application is first described in detail by using a communication system shown in FIG. 1 as an example. FIG. 1 is a schematic diagram of a communication system 100 applicable to a method according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a radio link. A plurality of antennas may be configured for each communication device such as the network device 110 or the terminal device 120. For each communication device in the communication system 100, the plurality of configured antennas may include at least one transmit antenna configured to send a signal and at least one receive antenna configured to receive a signal. Therefore, the communication devices, for example, the network device 110 and the terminal device 120, in the communication system 100 may communicate with each other by using a multi-antenna technology.

It should be understood that the network device in the communication system may be any device having a wireless transceiver function or a chip that may be disposed in the device. The device includes but is not limited to an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a Home evolved Node B or a Home Node B, HNB), a baseband unit (baseband Unit, BBU), an access point (access point, AP) in a wireless fidelity (wireless fidelity, WIFI) system, a wireless relay node, a wireless backhaul node, a transmission point (transmission point, TP), a transmission reception point (transmission and reception point, TRP), or the like, may be a gNB or a transmission point (TRP or TP) in an NR system, for example, a 5G system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a centralized unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in such an architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

It should be further understood that the terminal device in the communication system may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in the embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control, a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application.

It should be further understood that FIG. 1 is merely a simplified schematic diagram used as an example for ease of understanding. The communication system 100 may further include another network device or another terminal device, which is not shown in FIG. 1.

For ease of understanding the embodiments of this application, the following briefly describes a processing process of a downlink signal at the physical layer before the downlink signal is sent. It should be understood that the processing process of the downlink signal described below may be performed by the network device, or may be performed by a chip disposed in the network device. For ease of description, these devices are collectively referred to as a network device below.

The network device may process a codeword (code word) on a physical channel. The codeword may be a coded bit obtained through encoding (for example, including channel encoding). The codeword is scrambled (scrambling) to generate a scrambled bit. Modulation mapping (modulation mapping) is performed on the scrambled bit, to obtain a modulated symbol. The modulated symbol is mapped to a plurality of layers (layer) through layer mapping (layer mapping). The layer is also referred to as a transport layer. The modulated symbol that undergoes the layer mapping is precoded (precoding), to obtain a precoded signal. The precoded signal is mapped to a plurality of resource elements (resource element, RE) through RE mapping. These REs are then transmitted through an antenna port (antenna port) after orthogonal multiplexing (orthogonal frequency division multiplexing, OFDM) modulation is performed on the REs.

It should be understood that the processing process of the downlink signal described above is merely an example for description, and shall not constitute any limitation on this application.

It should be further understood that, in the embodiments of this application, the network device may first measure an uplink channel based on an uplink reference signal to obtain channel information, for example, angle information and delay information, and process the channel information to obtain a downlink signal. For example, the downlink signal is precoded based on the channel information, to obtain a precoded reference signal. Details are described in the following embodiments.

Before the embodiments of this application are described, several terms used in this application are first described briefly.
1. Channel reciprocity: In a time division duplex (time division duplexing, TDD) mode, on an uplink channel and a downlink channel, signals are transmitted on different time domain resources in a same frequency domain resource. Within a relatively short time (for example, a channel propagation coherence time), it may be considered that the signals on the uplink and downlink channels are subjected to same channel fading. This is reciprocity between the uplink and downlink channels. Based on the reciprocity between the uplink and downlink channels, the network device may measure the uplink channel based on an uplink reference signal, for example, a sounding reference signal (sounding reference signal, SRS), and may estimate the downlink channel based on the uplink channel, to determine a precoding matrix used for downlink transmission.

An uplink channel and a downlink channel in a frequency division duplex (frequency division duplexing, FDD) mode have partial reciprocity, for example, angle reciprocity and delay reciprocity. In other words, a delay and an angle on the uplink channel and the downlink channel in the FDD mode have reciprocity. Therefore, the angle and the delay may also be referred to as parameters with reciprocity. An angle may be an angle of arrival (angle of arrival, AOA) at which a signal arrives at a receive antenna through a radio channel, or may be an angle of departure (angle of departure, AOD) at which a signal is transmitted by using a transmit antenna. In the embodiments of this application, the angle may be an angle of arrival at which an uplink signal arrives at the network device, or may be an angle of departure at which the network device transmits a downlink signal. In the embodiments of this application, each angle may be represented by using one angle vector. A delay may refer to a transmission period of a radio signal on each different transmission path, is determined by a distance and a speed, and is irrelevant to frequency domain of the radio signal. In the embodiments of this application, each delay may be represented by using one delay vector.

In the embodiments of this application, one or more angle vectors may be loaded to a downlink reference signal. This may be understood as that a downlink reference signal is precoded based on one or more angle vectors. Alternatively, one or more delay vectors may be loaded to a downlink reference signal. This may be understood as that a downlink reference signal is precoded based on one or more delay vectors.

2. Reference signal (reference signal, RS) and reference signal resource: The reference signal may also be referred to as a pilot (pilot), a reference sequence, or the like. In the embodiments of this application, the reference signal may be a reference signal used for channel measurement. For example, the reference signal may be a channel state information reference signal (channel state information reference signal, CSI-RS) used for measuring a downlink channel, or may be an SRS or a DT-RS used for measuring an uplink channel. It should be understood that the foregoing reference signals are merely examples, and shall not constitute any limitation on this application. This application does not exclude a possibility that another reference signal is defined in a future protocol to implement a same or similar function.

The reference signal resource may be used to configure a transmission attribute of the reference signal, for example, a time-frequency resource location, a port mapping relationship, a power factor, and a scrambling code. For details, refer to the conventional technology. A transmit end device may send a reference signal based on a reference signal resource, and a receive end device may receive a reference signal based on a reference signal resource. One reference signal resource may include one or more resource blocks (resource block, RB). The reference signal resource may include a CSI-RS resource (CSI-RS resource) and an SRS resource (SRS resource). To distinguish between different reference signal resources, each reference signal resource may correspond to one reference signal resource identifier, for example, a CSI-RS resource indicator (CSI-RS resource indicator, CRI), or an SRS resource index (SRS resource index, SRI).

It should be understood that the reference signals and the corresponding reference signal resources enumerated above are merely examples for description, and shall not constitute any limitation on this application. This application does not exclude a possibility of defining another reference signal in a future protocol to implement a same or similar function.

In a possible design, the network device may send a CSI resource setting (CSI resource setting) to the terminal device by using an RRC message, and each CSI resource setting may include S (S≥1, and S is an integer) CSI-RS resource sets (CSI-RS resource sets). Each CSI-RS resource set may include K (K≥1, and K is an integer) non-zero power (non-zero power, NZP) CSI-RS resources (NZP CSI-RS resources), and optionally, may further include a zero power (zero power) CSI-RS resource. The terminal device may receive a CSI-RS on the K NZP CSI-RS resources indicated by the network device.

It should be understood that the foregoing specific method for indicating the reference signal resource by the network device to the terminal device is merely an example, and shall not constitute any limitation on this application. This application does not exclude a possibility of indicating the reference signal resource by using other signaling or in another manner in a future protocol. For example, the network device may further indicate J (K≥J≥1, and J is an integer) currently available NZP CSI-RS resources in the K NZP CSI-RS resources by using DCI.

3. Time domain behavior (time domain behavior) parameter: In a reference signal resource configuration and a CSI report setting (CSI report setting), different time domain behaviors may be indicated by using different time domain behavior parameters. A time domain behavior parameter in a reference signal resource configuration may be used to indicate the terminal device to receive a time domain behavior of a reference signal. A time domain behavior parameter of a CSI report setting may be used to indicate the terminal device to report a time domain behavior of CSI.

As an example instead of a limitation, the time domain behavior may include, for example, a periodic (periodic) behavior, a semi-persistent (semi-persistent) behavior, and an aperiodic (aperiodic) behavior. The following uses a CSI-RS as an example to describe the three time domain behaviors.

That a time domain behavior of the CSI-RS is periodic indicates that the CSI-RS is sent periodically. Specifically, after the network device configures information about the periodic CSI-RS by using RRC, and configuration signaling takes effect, the network device periodically sends the CSI-RS to the terminal device. That a time domain behavior of the CSI-RS is aperiodic indicates that the CSI-RS is sent aperiodically. Specifically, after configuring information about the aperiodic CSI-RS by using RRC, the network device usually does not immediately send the CSI-RS. When sending the aperiodic CSI-RS, the network device first sends signaling (for example, specific DCI signaling) to notify the terminal device that the network device is to send the aperiodic CSI-RS. That a time domain behavior of the CSI-RS is semi-persistent indicates that the CSI-RS is sent in a semi-persistent manner. Specifically, after configuring information about the semi-persistent CSI-RS by using RRC, the network device usually does not immediately send the CSI-RS. When sending a non-persistent CSI-RS, the network device first sends signaling (for example, specific MAC-CE signaling) to notify the terminal device that after activation signaling takes effect, the network device is to send the semi-persistent CSI-RS. Once the network device triggers sending of the semi-persistent CSI-RS, the network device periodically sends the CSI-RS unless the network device delivers deactivation signaling.

FIG. 2 is a schematic diagram of a timing behavior when a network device configures (for example, a base station performs configuration by using RRC) a to-be-transmitted CSI-RS. A CSI-RS that is periodically sent indicates that a time domain behavior of the CSI-RS is periodic. A CSI-RS that is sent aperiodically indicates that a time domain behavior of the CSI-RS is aperiodic. A CSI-RS that is sent in a semi-persistent manner indicates that a time domain behavior of the CSI-RS is semi-persistent. It can be learned from FIG. 2 that, for a CSI-RS, time domain persistence degrees of different timing behaviors may be defined as: duration of a CSI-RS that is periodically sent > duration of a CSI-RS that is sent in a semi-persistent manner > duration of a CSI-RS that is aperiodically sent. In other words, a time domain persistence degree corresponding to a CSI-RS that is periodically sent > a time domain persistence degree corresponding to a CSI-RS that is sent in a semi-persistent manner > a time domain persistence degree corresponding to a CSI-RS that is aperiodically sent.

An SRS is similar to the CSI-RS. An SRS is configured by the network device by using RRC. The network device delivers signaling to the terminal device to indicate the terminal device to send the SRS.

In the following embodiments, for brevity, a P CSI-RS, an AP CSI-RS, and an SP CSI-RS are used to respectively represent a CSI-RS that is periodically sent (that is, a time domain behavior of the CSI-RS is periodic), a CSI-RS that is aperiodically sent (that is, a time domain behavior of the CSI-RS is aperiodic) and a CSI-RS that is sent in a semi-persistent manner (that is, a time domain behavior of the CSI-RS is semi-persistent). A P SRS, an AP SRS, and an SP SRS respectively indicate an SRS that is periodically sent (that is, a time domain behavior of the SRS is periodic), an SRS that is aperiodically sent (that is, a time domain behavior of the SRS is aperiodic), and an SRS that is sent in a semi-persistent manner (that is, a time domain behavior of the SRS is semi-persistent). P CSI reporting, AP CSI reporting, and SP CSI reporting respectively indicate periodic CSI reporting (that is, a time domain behavior of CSI reporting is periodic), aperiodic CSI reporting (that is, a time domain behavior of CSI reporting is aperiodic), and semi-persistent CSI reporting (that is, a time domain behavior of CSI reporting is semi-persistent).

It should be understood that the foregoing time domain persistence degrees are named only for distinguishing different time domain behaviors, and shall not constitute any limitation on this application. This application does not exclude a possibility that other names are defined in a future protocol to represent a same or similar meaning.

In an FDD system, a spacing between an uplink frequency band and a downlink frequency band is far greater than a coherence bandwidth. Therefore, an uplink frequency band and a downlink channel do not have complete reciprocity, and downlink precoding cannot be performed accurately by using uplink channel information. However, in an FDD system, an uplink physical channel and a downlink physical channel have partial reciprocity, for example, angle reciprocity and delay reciprocity.

Existing codebooks do not utilize partial reciprocity of FDD. A typical codebook, for example, a beam selection codebook, using a discrete Fourier transform (discrete fourier transform, DFT) beam to represent a channel, has relatively low precision and relatively poor multi-user MIMO transmission performance. A beam superposition codebook, using a plurality of DFT vectors superposed to obtain a precoding vector to represent a channel, has relatively high precision and relatively high multi-user MIMO transmission performance. However, a plurality of superposition coefficients needs to be fed back for each sub-band, and thus feedback overheads are very high.

In view of this, this application provides a method. An idea that some channel features in FDD have reciprocity is introduced into CSI feedback, to reduce complexity of a terminal device and reduce feedback overheads.

To facilitate understanding of the embodiments of this application, the following descriptions are provided.

First, in the embodiments of this application, "used to indicate" may include "used to directly indicate" and "used to indirectly indicate". When a piece of indication information is described as indicating A, the indication information may directly indicate A or indirectly indicate A, but it does not necessarily indicate that the indication information carries A. For example, a network device may pre-configure, by using higher layer signaling, a reference signal resource used to transmit a reference signal, and indicate the reference signal resource to a terminal device by using indication information, for example, downlink control information (downlink control information, DCI).

Second, definitions of many features (for example, CSI, an angle, and a delay) in this application are merely used to explain functions of the features by using examples. For detailed content of the features, refer to the conventional technology.

Third, terms "first", "second", "third", and "fourth", and various sequence numbers in the following embodiments are merely used for differentiation for ease of description, and are not used to limit the scope of the embodiments of this application. For example, different reference signals are distinguished.

Fourth, in the embodiments shown below, "being pre-obtained" may include being indicated by the network device by using signaling or being predefined, for example, defined in a protocol. The "predefinition" may be implemented in a manner in which corresponding code, a table, or other related indication information may be prestored in a device (for example, including a terminal device and a network device). A specific implementation of the "predefinition" is not limited in this application.

Fifth, "store" in the embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form, and this is not limited in this application.

Sixth, a "protocol" in the embodiments of this application may be a standard protocol in the communication field, for example, may include an LTE protocol, an NR protocol, and a related protocol applied to a future communication system. This is not limited in this application.

Seventh "At least one" refers to one or more, and "a plurality of' refers to two or more. The character "/" generally indicates an "or" relationship between the associated objects. "At least one of the following items" or a similar expression means any combination of these items, including a single item or any combination of a plurality of items. For example, at least one (piece) of a, b, or c may represent: a, b, c, a-b, a-c, b-c, or a-b-c, where a, b, and c may be singular or plural.

The method in the embodiments of this application is described in detail below with reference to the accompanying drawings.

It should be understood that the method provided in the embodiments of this application may be applied to a system in which communication is performed by using a multi-antenna technology, for example, the communication system 100 shown in FIG. 1. The communication system may include at least one network device and at least one terminal device. The network device and the terminal device may communicate with each other by using a multi-antenna technology.

It should be further understood that, a specific structure of an execution body of the method provided in the embodiments of this application is not specifically limited in the embodiments shown below, provided that a program that records code of the method provided in the embodiments of this application can be run to perform communication according to the method provided in the embodiments of this application. For example, the execution body of the method provided in the embodiments of this application may be the terminal device or the network device, or a functional module that can invoke and execute the program in the terminal device or the network device.

Without loss of generality, interaction between the network device and the terminal device is used as an example below to describe in detail the method for configuring channel state information reporting provided in the embodiments of this application.

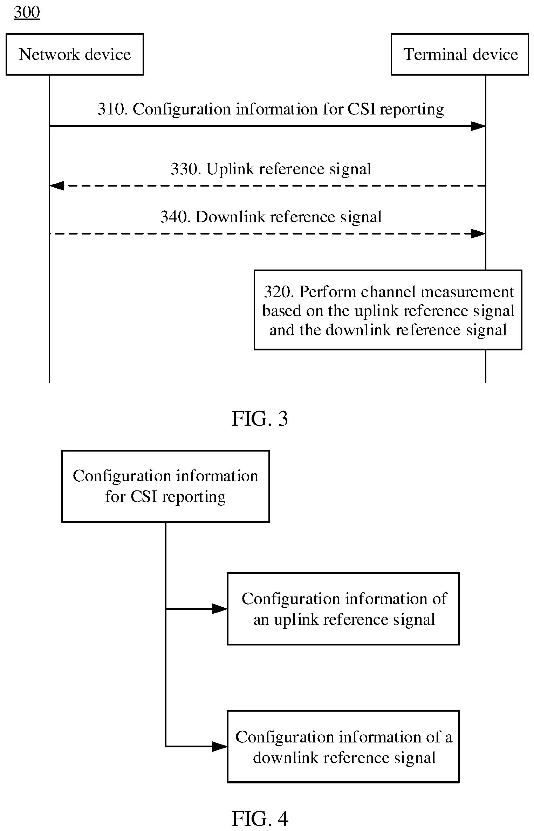

FIG. 3 is a schematic interaction diagram of a method for configuring channel state information reporting according to an embodiment of this application from a perspective of device interaction. As shown in FIG. 3, the method 300 may include step 310 to step 340. The following describes the steps in the method 300 in detail.

In S310, a terminal device receives configuration information for CSI reporting. Correspondingly, a network device sends the configuration information for the CSI reporting.

The configuration information for the CSI reporting indicates CSI-related configuration information. For example, the configuration information for the CSI reporting may be referred to as a CSI reporting setting. For brevity, the CSI reporting setting is used in the following embodiments. A first reference signal is used for measuring a downlink channel. The first reference signal may be, for example, a CSI-RS. In the following embodiments, for brevity, a downlink reference signal is used to represent the first reference signal. A second reference signal is used for measuring an uplink channel. The second reference signal may be, for example, an SRS. In the following embodiments, for brevity, an uplink reference signal is used to represent the second reference signal.

In this application, the CSI reporting setting is associated with configuration information of the downlink reference signal and configuration information of the uplink reference signal. Alternatively, the CSI reporting setting is associated with configuration information of the downlink reference signal, and the configuration information of the downlink reference signal is associated with configuration information of the uplink reference signal. The following describes the two association manners.

### Manner 1

The CSI reporting setting is associated with the configuration information of the downlink reference signal and the configuration information of the uplink reference signal.

The network device may send resource configuration information of a reference signal to the terminal device in advance by using higher layer signaling, for example, the CSI resource setting information listed above. The terminal device may determine a reference signal resource based on the resource configuration information that is of the reference signal and that is sent by the network device. Therefore, the terminal device may receive the reference signal based on the reference signal resource.

For example, the uplink reference signal is an SRS, and the downlink reference signal is a CSI-RS. The network device may configure the SRS to be associated with the CSI reporting setting. For example, the network device configures an SRS resource setting to be associated with the CSI reporting setting. As shown in FIG. 4, the SRS resource setting and a CSI resource setting are associated with one CSI reporting setting.

In a possible implementation, the network device may configure an associated SRS resource setting and CSI-RS resource setting by using the CSI reporting setting. Specifically, the CSI reporting setting may include an indication of the SRS resource setting and an indication of the CSI-RS resource setting. By default, an SRS resource setting and a CSI-RS resource setting that are configured in a same CSI reporting setting are associated. In other words, there is an association relationship between an SRS resource setting and a CSI resource setting that are configured in one CSI reporting setting. A form of an indication of an SRS resource setting may be an SRS resource index (SRS resource index, SRI), and a form of an indication of a CSI-RS resource setting may be a CSI-RS resource indicator (CSI-RS resource indicator, CRI). A specific resource configuration of an SRS corresponding to the SRS resource index and a specific resource configuration of a CSI-RS corresponding to the CSI-RS resource indicator may be delivered by using RRC signaling.

In Manner 1, the configuration information (where for example, the configuration information may be a CSI reporting setting) for the CSI reporting is associated with the configuration information of the uplink reference signal, and the network device may precode the downlink reference signal based on an angle and a delay that are reciprocal between an uplink channel and a downlink channel. In this way, the terminal device is unaware of a feature with reciprocity (for example, an angle and a delay), so that during detection, the terminal device only needs to detect information without reciprocity, thereby greatly reducing feedback overheads of the terminal device.

### Manner 2

The configuration information of the downlink reference signal is associated with the configuration information of the uplink reference signal.

For example, the downlink reference signal is a CSI-RS, and the uplink reference signal is an SRS. The network device may configure the SRS to be associated with CSI-RS related configuration information. For example, the network device configures the SRS to be associated with any one of the following: a CSI resource setting, a CSI resource set and a CSI-RS resource. The associated SRS may be a dedicated SRS, or may be an existing SRS used for measuring an uplink channel. This is not limited in this application. The CSI resource setting includes at least one CSI resource set, and the CSI resource set includes at least one CSI-RS resource.

Information associated with a CSI reporting setting includes the CSI resource setting, used for channel interference measurement, for example, measuring whether a channel is with (with) or without (without) noise. The CSI resource setting is associated with the SRS, so that the SRS and the CSI reporting setting can have an association relationship.

In a possible implementation, the network device may configure the associated SRS by using the CSI resource setting. Specifically, the CSI resource setting may include an SRS indication. For example, the network device configures an identity (identity, ID) of the associated SRS in the CSI resource setting.

In another possible implementation, the network device may configure the associated SRS by using the CSI resource set. Specifically, the CSI resource set may include an SRS indication. For example, the network device configures an identity ID of the associated SRS in the CSI resource set.

In another possible implementation, the network device may configure the associated SRS by using the CSI-RS resource. Specifically, the CSI-RS resource may include an SRS indication. For example, the network device configures an identity ID of the associated SRS in the CSI-RS resource.

In Manner 2, the configuration information of the downlink reference signal is associated with the configuration information of the uplink reference signal, and the network device may precode the downlink reference signal based on an angle and a delay that are reciprocal between an uplink channel and a downlink channel. In this way, the terminal device is unaware of a feature with reciprocity (for example, an angle and a delay), so that during detection, the terminal device only needs to detect information without reciprocity, thereby greatly reducing feedback overheads of the terminal device.

The foregoing two manners are merely examples for description, and this application is not limited thereto. Any manner in which the configuration information of the uplink reference signal can be associated with CSI reporting related information falls within the protection scope of this application.

Optionally, time domain behaviors of the downlink reference signal and the uplink reference signal may be the same, or may be different. An example in which the uplink reference signal is an SRS and the downlink reference signal is a CSI-RS is used below for description with reference to Table 1.

**Table 1**

| | P SRS | SP SRS | AP SRS |
|---|---|---|---|
| P CSI-RS | P/SP/AP CSI reporting | Not supported | Not supported |
| SP CSI-RS | SP/AP CSI reporting | SP/AP CSI reporting | Not supported |
| AP CSI-RS | AP CSI reporting | AP CSI reporting | AP CSI reporting |

It can be learned from Table 1 that:
The P SRS supports a P CSI-RS, an SP CSI-RS, and an AP CSI-RS. In other words, when a time domain behavior of an SRS is periodic, CSI reporting may be supported regardless of whether a time domain behavior of a CSI-RS is periodic, aperiodic, or semi-persistent. For example, when both a time domain behavior of an SRS and a time domain behavior of a CSI-RS are periodic, CSI reporting may be supported, and a time domain behavior of the CSI reporting may be periodic, aperiodic, or semi-persistent.
An SP SRS supports an SP CSI-RS and an AP CSI-RS. In other words, when a time domain behavior of an SRS is semi-persistent, and a time domain behavior of a CSI-RS is aperiodic or semi-persistent, CSI reporting may be supported. For example, when a time domain behavior of an SRS is semi-persistent, and a time domain behavior of a CSI-RS is semi-persistent, CSI reporting may be supported, and a time domain behavior of the CSI reporting may be periodic, aperiodic, or semi-persistent.
An AP SRS supports the AP CSI-RS. In other words, when a time domain behavior of an SRS is aperiodic, and a time domain behavior of a CSI-RS is aperiodic, CSI reporting may be supported. For example, when both a time domain behavior of an SRS and a time domain behavior of a CSI-RS are aperiodic, CSI reporting may be supported, and a time domain behavior of the CSI reporting is aperiodic.

Optionally, a time domain persistence degree corresponding to a time domain behavior of the downlink reference signal is not higher than a time domain persistence degree corresponding to a time domain behavior of the uplink reference signal. In other words, the time domain persistence degree corresponding to the time domain behavior of the downlink reference signal is lower than or equal to the time domain persistence degree corresponding to the time domain behavior of the uplink reference signal.

For example, the downlink reference signal is a CSI-RS, and the uplink reference signal is an SRS. In a possible implementation, a time domain behavior of the SRS is periodic, and a time domain behavior of the CSI-RS may be periodic, aperiodic, or non-persistent. In another possible implementation, a time domain behavior of the SRS is semi-persistent, and a time domain behavior of the CSI-RS may be aperiodic or non-persistent. In another possible implementation, a time domain behavior of the SRS is aperiodic, and a time domain behavior of the CSI-RS is aperiodic.

Optionally, a time domain persistence degree corresponding to the time domain behavior of the CSI reporting is not higher than the time domain persistence degree corresponding to the time domain behavior of the downlink reference signal. In other words, the time domain persistence degree corresponding to the time domain behavior of the CSI reporting is lower than or equal to the time domain persistence degree corresponding to the time domain behavior of the downlink reference signal.

For example, the downlink reference signal is a CSI-RS. In a possible implementation, a time domain behavior of the CSI-RS is periodic, and a time domain behavior of the CSI reporting may be periodic, aperiodic, or non-persistent. In another possible implementation, a time domain behavior of the CSI-RS is semi-persistent, and a time domain behavior of the CSI reporting may be aperiodic or non-persistent. In another possible implementation, a time domain behavior of the CSI-RS is aperiodic, and a time domain behavior of the CSI reporting may be aperiodic.

It can be learned from the foregoing that, in this embodiment of this application, optionally, the time domain persistence degree corresponding to the time domain behavior of the downlink reference signal is not higher than the time domain persistence degree corresponding to the time domain behavior of the uplink reference signal, and the time domain persistence degree corresponding to the time domain behavior of the CSI reporting is not higher than the time domain persistence degree corresponding to the time domain behavior of the downlink reference signal. In other words, the time domain persistence degree corresponding to the time domain behavior of the downlink reference signal is lower than or equal to the time domain persistence degree corresponding to the time domain behavior of the uplink reference signal, and the time domain persistence degree corresponding to the time domain behavior of the CSI reporting is lower than or equal to the time domain persistence degree corresponding to the time domain behavior of the downlink reference signal.

The time domain behaviors of the downlink reference signal and the uplink reference signal may be the same, or may be different. This is not limited in this embodiment of this application. An example in which the downlink reference signal is a CSI-RS, and the uplink reference signal is an SRS is used for description.

### Case 1: The time domain behavior of the SRS is the same as that of the CSI-RS.

In a possible implementation, the network device configures both the time domain behavior of the SRS and the time domain behavior of the CSI-RS to be periodic. In other words, the terminal device periodically sends the SRS, and the network device periodically sends the CSI-RS. In this case, the time domain behavior of the CSI reporting may be configured to be periodic. In other words, the terminal device may periodically perform CSI reporting. Alternatively, the time domain behavior of the CSI reporting may be configured to be aperiodic. In other words, the terminal device may aperiodically perform CSI reporting. Alternatively, the time domain behavior of the CSI reporting may be configured to be semi-persistent. In other words, the terminal device may continuously perform CSI reporting.

In another possible implementation, the network device configures both the time domain behavior of the SRS and the time domain behavior of the CSI-RS to be aperiodic. In other words, the terminal device aperiodically sends the SRS, and the network device aperiodically sends the CSI-RS. In this case, the time domain behavior of CSI reporting may be configured to be aperiodic. In other words, the terminal device may aperiodically perform CSI reporting.

In another possible implementation, the network device configures both the time domain behavior of the SRS and the time domain behavior of the CSI-RS to be semi-persistent. In other words, the terminal device sends the SRS in a semi-persistent manner, and the network device sends the CSI-RS in a semi-persistent manner. In this case, the time domain behavior of CSI reporting may be configured to be aperiodic. In other words, the terminal device may aperiodically perform CSI reporting. Alternatively, the time domain behavior of the CSI reporting may be configured to be semi-persistent. In other words, the terminal device may continuously perform CSI reporting.

### Case 2: The time domain behavior of the SRS is different from that of the CSI-RS.

In a possible implementation, the network device configures the time domain behavior of the SRS to be periodic, and configures the time domain behavior of the CSI-RS to be aperiodic or semi-persistent. In other words, the terminal device periodically sends the SRS, and the network device aperiodically sends the CSI-RS or sends the CSI-RS in a semi-persistent manner. When the time domain behavior of the SRS is periodic, and the time domain behavior of the CSI-RS is aperiodic, the time domain behavior of CSI reporting may be configured to be aperiodic. In other words, the terminal device may aperiodically perform CSI reporting. When the time domain behavior of the SRS is periodic, and the time domain behavior of the CSI-RS is semi-persistent, the time domain behavior of CSI reporting may be configured to be aperiodic or semi-persistent. In other words, the terminal device may aperiodically perform CSI reporting or perform CSI reporting in a semi-persistent manner.

In another possible implementation, the network device configures the time domain behavior of the SRS to be semi-persistent, and configures the time domain behavior of the CSI-RS to be aperiodic. In other words, the terminal device periodically sends the SRS, and the network device sends the CSI-RS in a semi-persistent manner. In this case, the time domain behavior of CSI reporting may be configured to be aperiodic. In other words, the terminal device may aperiodically perform CSI reporting.

The foregoing descriptions are merely examples for ease of understanding. This application is not limited thereto.

In S320, the terminal device performs channel measurement based on the uplink reference signal and the downlink reference signal.

The terminal device performs channel measurement based on the downlink reference signal and feeds back CSI, where the downlink reference signal is a reference signal obtained by processing channel information obtained through uplink channel measurement based on the uplink reference signal. In other words, the network device obtains the channel information through uplink channel measurement, where the channel information includes, for example, angle information, delay information, or angle information and delay information, and processes the channel information to obtain the downlink reference signal.

The downlink reference signal is a reference signal obtained by processing information obtained through uplink channel measurement based on the uplink reference signal. In a possible implementation, a precoding matrix (precoding matrix) of the downlink reference signal is obtained through calculation based on the uplink reference signal. The network device obtains a channel feature with reciprocity, for example, an angle and a delay, through uplink channel measurement. The feature with reciprocity is delivered by using a weight of the downlink reference signal. Because the network device precodes the reference signal based on the angle and the delay with reciprocity between the uplink channel and the downlink channel, the terminal device is unaware of the feature with reciprocity, and the terminal device feeds back information that is on the downlink channel and that is without reciprocity.

It should be understood that a specific method used by the network device to load a feature with reciprocity (for example, an angle and a delay), obtained through uplink channel measurement, to the downlink reference signal is not limited in this embodiment of this application. For example, the network device estimates an uplink channel matrix based on a received uplink reference signal such as an SRS, and determines A (A≥1, and A is an integer) angles. The network device precodes a downlink reference signal such as a CSI-RS based on the A angles to obtain a precoded reference signal. In another example, the network device estimates an uplink channel matrix based on a received uplink reference signal such as an SRS, and determines B (B≥1, and B is an integer) delays. The network device precodes a downlink reference signal such as a CSI-RS based on the B delays to obtain a precoded reference signal. In another example, the network device estimates an uplink channel matrix based on a received uplink reference signal such as an SRS, and determines A angles and B delays. The network device precodes a downlink reference signal such as a CSI-RS based on the A angles and the B delays to obtain a precoded reference signal.

Optionally, the network device loads information with reciprocity, for example, an angle and a delay, to the downlink reference signal. Correspondingly, after receiving the downlink reference signal, the terminal device performs CSI measurement. For example, when the terminal device performs CSI measurement feedback, channel signals on subbands are first directly superposed, and then quantized feedback is performed based on a superposed channel signal. Alternatively, optionally, a report quality (report quality) associated with the CSI reporting setting includes only a precoding matrix indicator (precoding matrix indicator, PMI).

The network device measures the uplink channel based on the uplink reference signal. The uplink reference signal may be an existing uplink reference signal, or may be an associated uplink reference signal. This is not limited in this embodiment of this application. In addition, for a specific method for measuring the uplink channel by the network device based on the uplink reference signal, refer to the conventional technology. For brevity, detailed descriptions of the specific method are omitted herein.

Optionally, before S320, the method 300 includes S330 and S340.

In S330, the terminal device sends the uplink reference signal. Correspondingly, the network device receives the uplink reference signal.

In S340, the terminal device receives the downlink reference signal, where the downlink reference signal is a reference signal obtained by processing information obtained through uplink channel measurement based on the uplink reference signal. Correspondingly, the network device sends the downlink reference signal.

When the time domain behavior of the reference signal is aperiodic or semi-persistent, signaling is needed for triggering. Optionally, a trigger state (trigger state) configured by the network device is associated with a CSI reporting ID, a downlink reference signal ID (for example, a CSI-RS ID), a downlink reference signal set ID (for example, a CSI-RS set ID), an uplink reference signal ID (for example, an SRS ID), or an uplink reference signal set ID (for example, an SRS set ID). The following uses several possible implementations for description.

In a possible implementation, both the time domain behavior of the downlink reference signal and the time domain behavior of the uplink reference signal are aperiodic, and the network device may activate the downlink reference signal and the uplink reference signal by using one piece of signaling. Correspondingly, the terminal device learns, by using the signaling, that the network device is to deliver the downlink reference signal, and the terminal device is to send the uplink reference signal. The signaling may be delivered by using DCI.

In another possible implementation, the time domain behavior of CSI reporting, the time domain behavior of the downlink reference signal, and the time domain behavior of the uplink reference signal are all aperiodic, and the network device may activate the CSI reporting, the downlink reference signal, and the uplink reference signal by using one piece of signaling. Correspondingly, the terminal device learns, by using the signaling, that the network device is to deliver the downlink reference signal, and the terminal device is to send the uplink reference signal and the CSI. The signaling may be delivered by using DCI.

In another possible implementation, both the time domain behavior of the downlink reference signal and the time domain behavior of the uplink reference signal are semi-persistent, and the network device may activate the semi-persistent downlink reference signal and the semi-persistent uplink reference signal by using one piece of signaling. Correspondingly, the terminal device learns, by using the signaling, that the network device is to deliver the downlink reference signal, and the terminal device is to send the uplink reference signal. The signaling may be delivered by using RRC or a MAC-CE.

In another possible implementation, both the time domain behavior of the downlink reference signal and the time domain behavior of the uplink reference signal are semi-persistent, and the network device may deactivate the semi-persistent downlink reference signal and the semi-persistent uplink reference signal by using one piece of signaling. Correspondingly, the terminal device learns, by using the signaling, that within the time unit, the network device stops delivering the downlink reference signal, and the terminal device is to stop sending the uplink reference signal. The signaling may be delivered by using RRC or a MAC-CE.

In another possible implementation, the time domain behavior of the downlink reference signal, the time domain behavior of the uplink reference signal, and the time domain behavior of CSI reporting are all semi-persistent, and the network device may activate the semi-persistent downlink reference signal, uplink reference signal, and CSI reporting by using one piece of signaling. Correspondingly, the terminal device learns, by using the signaling, that the network device is to deliver the downlink reference signal, and the terminal device is to send the uplink reference signal and the CSI. The signaling may be delivered by using RRC or a MAC-CE.

In another possible implementation, the time domain behavior of the downlink reference signal, the time domain behavior of the uplink reference signal, and the time domain behavior of CSI reporting are all semi-persistent, and the network device may deactivate the semi-persistent downlink reference signal, uplink reference signal, and CSI reporting by using one piece of signaling. Correspondingly, the terminal device learns, by using the signaling, that within the time unit, the network device stops delivering the downlink reference signal, and the terminal device is to stop sending the uplink reference signal and the CSI. The signaling may be delivered by using RRC or a MAC-CE.

Optionally, a moment at which the network device sends the downlink reference signal, a moment at which the terminal device sends the uplink reference signal, and a moment at which the terminal device performs CSI reporting may meet a specific condition. The following provides descriptions with reference to several possible implementations.

In a possible implementation, the time domain behavior of the CSI reporting is aperiodic, and the time domain behavior of the downlink reference signal and the time domain behavior of the uplink reference signal are not aperiodic. The network device may trigger, by using signaling (for example, DCI), the terminal device to perform CSI reporting. A minimum time interval between sending of the DCI by the network device and the CSI reporting performed by the terminal device may be a value predefined in a protocol, for example, a value of Z defined in an existing protocol. The value of Z indicates the minimum time interval between sending of the DCI by the network device and the CSI reporting performed by the terminal device.

In another possible implementation, the time domain behavior of the CSI reporting is aperiodic, the time domain behavior of the downlink reference signal is aperiodic, and the time domain behavior of the uplink reference signal is periodic or semi-persistent. The network device may trigger, by using signaling (for example, DCI), the terminal device to perform CSI reporting, and notify, by using the signaling, the terminal device that the network device is to deliver the downlink reference signal. A minimum time interval between sending of the DCI by the network device and the CSI reporting performed by the terminal device, and a minimum time interval between sending of the downlink reference signal by the network device and the CSI reporting performed by the terminal device may be values predefined in a protocol, for example, Z and Z', where Z represents the minimum time interval between sending of the DCI by the network device and the CSI reporting performed by the terminal device, and Z' represents the minimum time interval between sending of the downlink reference signal by the network device and the CSI reporting performed by the terminal device.

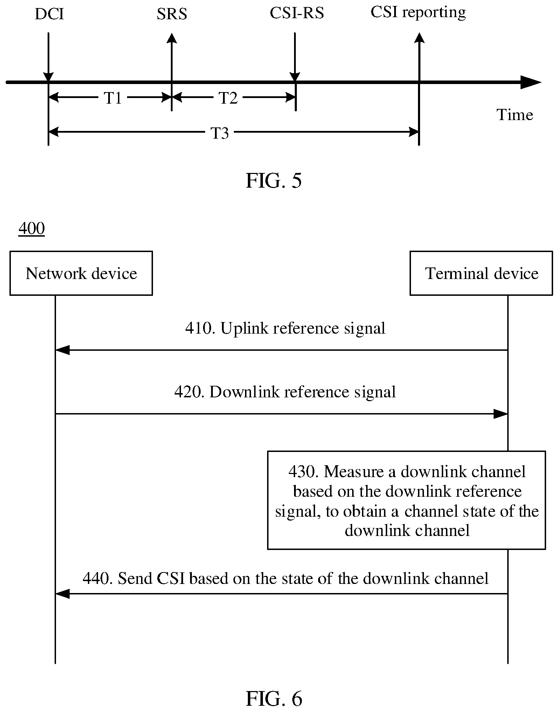

In another possible implementation, the time domain behavior of the CSI reporting, the time domain behavior of the downlink reference signal, and the time domain behavior of the uplink reference signal are all aperiodic. The network device may trigger, by using signaling (for example, DCI), the terminal device to send the uplink reference signal and perform CSI reporting, and notify, by using the signaling, the terminal device that the network device is to deliver the downlink reference signal. In this implementation, an example in which the uplink reference signal is an SRS, and the downlink reference signal is a CSI-RS is used. With reference to FIG. 5, a timing relationship among sending of the DCI by the network device, the CSI reporting performed by the terminal device, sending of the downlink reference signal by the network device, and sending of the uplink reference signal by the terminal device is described.

As shown in FIG. 5, T1 represents a time interval between sending of the DCI by the network device and sending of the SRS by the terminal device, T2 represents a time interval between sending of the SRS by the terminal device and sending of the CSI-RS by the network device, and T3 represents a time interval between sending of the DCI by the network device and the CSI reporting performed by the terminal device. Optionally, for a minimum value of T1, a result in an existing protocol may be reused: a data preparation time N2 is used for a low frequency, and N2+42 symbols are used for a high frequency. Optionally, a minimum value of T2 may depend on a computing capability of the network device. Alternatively, T2 is preset, for example, preset in a protocol. Alternatively, T2 is a fixed value, and a value of T2 may be different for different subcarrier spacings (subcarrier spacing, SCS). Optionally, a minimum value of T3 may be T1+T2+Z', where Z' represents a minimum time interval between sending of the CSI-RS by the network device and the CSI reporting performed by the terminal device.

Optionally, when a quantity of receive channels of the terminal device is smaller than a quantity of transmit channels, a value of T2 may be set depending on whether a reciprocity-based feedback mode is configured.

For example, in a possible implementation, if a mode other than the reciprocity-based feedback mode is configured, CSI feedback is performed based on a specific codebook. In this case, T2 (a time interval between sending of the SRS by the terminal device and sending of the CSI-RS by the network device) is fixed to 0. For example, the network device measures the uplink channel based on an original or pre-received uplink reference signal, and performs channel combination with reference to information fed back by the terminal device based on a downlink pilot that is within a same time unit with the uplink reference signal, to reconstruct the downlink channel.

In another possible implementation, if the reciprocity-based feedback mode is configured, T2 (a time interval between sending of the SRS by the terminal device and sending of the CSI-RS by the network device) is greater than or equal to 0. In this case, the terminal device may directly superpose channel coefficients of channels on receive channels that do not have a transmit channel capability, and quantize and feed back a superposed coefficient.

Optionally, in this embodiment of this application, the network device may configure a dedicated codebook, and the terminal device feeds back the CSI based on the dedicated codebook.

Downlink transmission is used as an example. In downlink transmission, the network device sends, to the terminal device, a reference signal used for measuring a downlink channel, for example, a CSI-RS. The terminal device may perform CSI measurement based on a received CSI-RS, and feed back CSI of the downlink channel to the network device. The CSI may include, for example, a PMI, a rank indication (rank indication, RI), a channel quality indicator (channel quality indicator, CQI), and the like.

A codebook based on which the terminal device feeds back the PMI may include a type 1 (type I) codebook and a type 2 (type II) codebook. An idea of the type 1 codebook is beam selection, and an idea of the type 2 codebook is beam linear combination. In this embodiment of this application, when the network device configures a dedicated codebook for CSI measurement based on reciprocity feedback, the terminal device may feed back the PMI based on the dedicated codebook. The CSI measurement based on the reciprocity feedback indicates a manner in which the network device first loads information with reciprocity (for example, an angle and a delay) to the downlink reference signal, and the terminal device only needs to measure information without reciprocity during measurement.

In a possible implementation, when performing CSI measurement feedback, the terminal device first superposes channel signals on all subbands, and then performs quantization feedback based on a superposed channel signal.

In still another possible implementation, reported content associated with the CSI reporting setting includes only the PMI.

For example, the terminal device may quantize each element in an ideal precoding matrix of each subband, and feed back a quantized value to the network device by using the PMI. The network device may determine the precoding matrix of each subband based on the PMI sent by the terminal device and information with reciprocity during measuring an uplink channel.

Optionally, if the reciprocity-based feedback mode is configured, the terminal device directly superposes channel coefficients of channels on receive channels that do not have a transmit channel capability, and quantize and feed back a superposed coefficient.

It should be understood that the foregoing enumerated uplink reference signal SRS and downlink reference signal CSI-RS are examples for ease of understanding. This application is not limited thereto. Any uplink reference signal and downlink reference signal may be applied to the embodiments of this application.

In this embodiment of this application, the configuration information for the CSI reporting is associated with the configuration information of the uplink reference signal, or the configuration information of the downlink reference signal is associated with the configuration information of the uplink reference signal, so that the network device can precode a downlink reference signal based on information (for example, an angle and a delay) that is determined through uplink channel measurement and that is with reciprocity, and the terminal device can measure a downlink channel based on a precoded reference signal. Because the network device precodes the reference signal based on the angle and the delay with reciprocity between an uplink channel and a downlink channel, information about the downlink channel detected by the terminal device is information without reciprocity. Therefore, the terminal device may not need to feed back, for example, the foregoing angle vector and delay vector, and feeds back a weighting coefficient corresponding to each angle-delay pair, thereby greatly reducing feedback overheads of the terminal device. In addition, the process of measuring the downlink channel by the terminal device is simplified by using reciprocity between the uplink and the downlink channel, to reduce calculation complexity of the terminal device in a channel measurement process.

The foregoing describes, based on the configuration information, the method for configuring CSI reporting provided in this embodiment of this application. The following describes, based on a reference signal, a CSI sending method 400 provided in an embodiment of this application with reference to FIG. 6. The method 400 includes step 410 to step 440.

In S410, a terminal device receives an uplink reference signal. Correspondingly, a network device receives the uplink reference signal.

In some modes, for example, in an FDD mode, angles and delays of an uplink channel and a downlink channel may be reciprocally exchanged. Therefore, after receiving the uplink reference signal, the network device may perform uplink measurement based on the uplink reference signal. A feature with reciprocity (for example, an angle and a delay) obtained through uplink channel measurement is loaded to a downlink reference signal. For example, the network device estimates an uplink channel matrix based on a received uplink reference signal such as an SRS, and determines A (A≥1, and A is an integer) angles. The network device precodes a downlink reference signal such as a CSI-RS based on the A angles to obtain a precoded reference signal. In another example, the network device estimates an uplink channel matrix based on a received uplink reference signal such as an SRS, and determines B (B≥1, and B is an integer) delays. The network device precodes a downlink reference signal such as a CSI-RS based on the B delays to obtain a precoded reference signal. In another example, the network device estimates an uplink channel matrix based on a received uplink reference signal such as an SRS, and determines A angles and B delays. The network device precodes a downlink reference signal such as a CSI-RS based on the A angles and the B delays to obtain a precoded reference signal.

In S420, the terminal device receives the downlink reference signal. Correspondingly, the network device sends the downlink reference signal.

The downlink reference signal is a reference signal obtained by processing information obtained through uplink channel measurement based on an uplink reference signal. The uplink reference signal may be a reference signal pre-received by the network device, or may be an existing reference signal. This is not limited in this embodiment of this application.

When the uplink reference signal is a reference signal pre-received by the network device, for example, the uplink reference signal in S410, the downlink reference signal received by the terminal device is a reference signal processed based on the uplink reference signal. The network device may reconstruct the downlink channel based on information obtained through measurement by using the uplink reference signal and supplementary information fed back by the terminal device based on the downlink reference signal, to further determine a precoding matrix adapted to the downlink channel.

When the uplink reference signal is an existing reference signal, the downlink reference signal received by the terminal device is a reference signal processed based on the uplink reference signal. The network device reconstructs the downlink channel based on information fed back by the terminal device based on the downlink reference signal and information with reciprocity (for example, an angle and a delay), to further determine a precoding matrix adapted to the downlink channel. The angle and the delay are obtained by the network device by performing channel measurement based on the uplink reference signal sent by the terminal device.

In S430, the terminal device measures the downlink channel based on the downlink reference signal, to obtain a channel state of the downlink channel.

The terminal device performs channel measurement based on the downlink reference signal and feeds back CSI, where the downlink reference signal is a reference signal obtained by processing channel information obtained through uplink channel measurement based on the uplink reference signal. The downlink reference signal is a reference signal obtained by processing information obtained through uplink channel measurement based on the uplink reference signal. In a possible implementation, a precoding matrix of the downlink reference signal is obtained through calculation based on the uplink reference signal. The network device obtains a channel feature with reciprocity, for example, an angle and a delay, through uplink channel measurement. The feature with reciprocity is delivered by using a weight of the downlink reference signal. Because the network device precodes the reference signal based on the angle and the delay with reciprocity between the uplink channel and the downlink channel, the terminal device is unaware of the feature with reciprocity, and the terminal device feeds back information that is on the downlink channel and that is without reciprocity. This reduces complexity of the terminal device and feedback overheads.

Optionally, when performing measurement feedback, the terminal device first directly superposes channel signals on all subbands, and then performs quantization feedback based on a superposed channel signal. Alternatively, optionally, reported content associated with a CSI reporting setting includes only a PMI.

Optionally, if the reciprocity-based feedback mode is configured, the terminal device directly superposes channel coefficients on channels on receive channels that do not have a transmit channel capability, and quantize and feed back a superposed coefficient.

In S440, the terminal device sends CSI based on the channel state of the downlink channel.

The terminal device may send the CSI based on a preconfigured CSI reporting setting. The CSI reporting setting is described in detail in the method 300. For brevity, details are not described herein again.

It should be understood that the foregoing enumerated uplink reference signal SRS and downlink reference signal CSI-RS are examples for ease of understanding. This application is not limited thereto. Any uplink reference signal and downlink reference signal may be applied to the embodiments of this application.

In this embodiment of this application, the network device can precode a downlink reference signal based on information (for example, an angle and a delay) that is determined through uplink channel measurement and that is with reciprocity, and the terminal device can measure a downlink channel based on a precoded reference signal. Because the network device precodes the reference signal based on the angle and the delay with reciprocity between an uplink channel and a downlink channel, information about the downlink channel detected by the terminal device is information without reciprocity. Therefore, the terminal device may not need to feed back, for example, the foregoing angle vector and delay vector, and feeds back a weighting coefficient corresponding to each angle-delay pair, thereby greatly reducing feedback overheads of the terminal device. In addition, the process of measuring the downlink channel by the terminal device is simplified by using reciprocity between the uplink and the downlink channel, to reduce calculation complexity of the terminal device in a channel measurement process.

In the foregoing method embodiment, the network device may precode a reference signal based on an angle with reciprocity, or may precode a reference signal based on a delay with reciprocity, or may precode a reference signal based on an angle and a delay with reciprocity. This is not limited in this embodiment of this application.

It should be understood that the foregoing listed types of the reference signals are merely examples for description, and should not be construed as any limitation on this application. A possibility that another reference signal is used to implement a same function or a similar function is not excluded in this application.

It should be further understood that sequence numbers of the processes do not mean execution sequences in the foregoing embodiments. The execution sequences of the processes should be determined based on functions and internal logic of the processes, and shall not constitute any limitation on the implementation processes of the embodiments of this application.

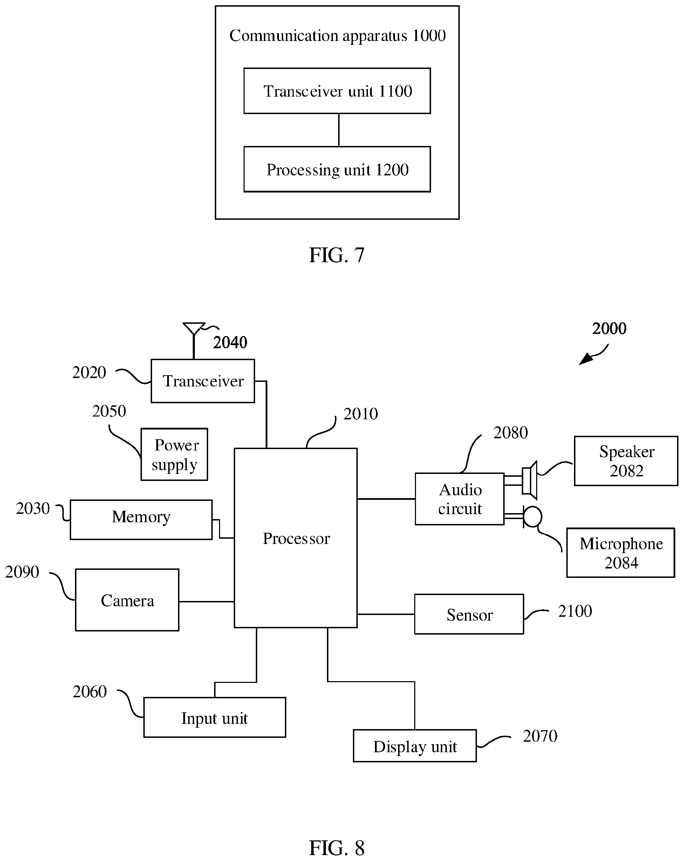

The foregoing describes in detail the methods provided in the embodiments of this application with reference to FIG. 3 to FIG. 6. The following describes in detail communication apparatuses provided in the embodiments of this application with reference to FIG. 7 to FIG. 9.

FIG. 7 is a schematic block diagram of a communication apparatus according to an embodiment of this application. As shown in the figure, the communication apparatus 1000 may include a transceiver unit 1100 and a processing unit 1200.

In a possible design, the communication apparatus 1000 may correspond to the terminal device in the foregoing method embodiments, for example, may be the terminal device, or may be a chip disposed in the terminal device.

Specifically, the communication apparatus 1000 may correspond to the terminal device in the method 300 or the method 400 according to the embodiments of this application. The communication apparatus 1000 may include units configured to perform the method performed by the terminal device in the method 300 in FIG. 3 or the method 400 in FIG. 6. In addition, the units in the communication apparatus 1000 and the foregoing other operations or functions are separately intended to implement corresponding procedures of the method 300 in FIG. 3 or the method 400 in FIG. 6.

In an implementation, the transceiver unit 1100 and the processing unit 1200 may be separately configured to perform the following operations.

The transceiver unit 1100 is configured to receive configuration information for CSI reporting, where the configuration information for the CSI reporting is associated with configuration information of a first reference signal and configuration information of a second reference signal, the second reference signal is used for measuring an uplink channel, and the first reference signal is used for measuring a downlink channel. The processing unit 1200 is configured to perform channel measurement based on the first reference signal and the second reference signal, and feed back CSI.

In another implementation, the transceiver unit 1100 and the processing unit 1200 may be separately configured to perform the following operations.

The transceiver unit 1100 is configured to receive configuration information for CSI reporting, where the configuration information for the CSI reporting is associated with configuration information of a first reference signal, the configuration information of the first reference signal is associated with configuration information of a second reference signal, the second reference signal is used for measuring an uplink channel, and the first reference signal is used for measuring a downlink channel. The processing unit 1200 is configured to perform channel measurement based on the first reference signal and the second reference signal, and feed back CSI.

Optionally, in the foregoing two implementations, the configuration information of the first reference signal is at least one of CSI resource setting CSI resource setting, a first reference resource set, and a first reference signal resource, where the CSI resource setting includes at least one first reference resource set, and the first reference resource set includes at least one first reference signal resource.

Optionally, that the configuration information of the first reference signal is associated with a second reference signal includes: The configuration information of the first reference signal is associated with an identity ID of the second reference signal.

In another implementation, the transceiver unit 1100 and the processing unit 1200 may be separately configured to perform the following operations.

The transceiver unit 1100 is configured to send a second reference signal used for measuring an uplink channel. The transceiver unit 1100 is further configured to receive a first reference signal, where the first reference signal is a reference signal obtained by a network device by processing channel information, and the channel information is obtained by the network device through uplink channel measurement based on the second reference signal. The processing unit 1200 is configured to measure a downlink channel based on the first reference signal to obtain a channel state of the downlink channel. The transceiver unit 1100 is configured to send CSI based on the channel state of the downlink channel.

Optionally, the channel information includes angle information or delay information.

In the foregoing possible implementations,
optionally, the transceiver unit 1100 is configured to send a second reference signal based on configuration information of the second reference signal; the transceiver unit 1100 is further configured to receive a first reference signal based on configuration information of the first reference signal, where the first reference signal is a reference signal obtained by a network device by processing channel information, and the channel information is obtained by the network device through uplink channel measurement based on the second reference signal; the processing unit 1200 is specifically configured to measure a downlink channel based on the first reference signal to obtain a channel state of the downlink channel and feed back CSI.

Optionally, a precoding matrix of the first reference signal is obtained by the network device through calculation based on the second reference signal.

Optionally, the second reference signal is periodic, and the first reference signal is periodic, aperiodic, or semi-persistent.

Optionally, the second reference signal is semi-persistent, and the first reference signal is aperiodic or semi-persistent.

Optionally, the second reference signal is aperiodic, and the first reference signal is aperiodic.

Optionally, the first reference signal and the second reference signal are semi-persistent, and
the transceiver unit 1100 is configured to receive first signaling sent by a network device, where the first signaling is used to activate the first reference signal and the second reference signal. Alternatively, the transceiver unit 1100 is configured to receive second signaling sent by a network device, where the second signaling is used to deactivate the first reference signal and the second reference signal.

Optionally, the CSI reporting, the first reference signal, and the second reference signal are all aperiodic, and
the transceiver unit 1100 is configured to receive third signaling sent by the network device, where the third signaling is used to notify the transceiver unit 1100 to report the CSI, the network device to send the first reference signal, and the transceiver unit 1100 to send the second reference signal.

Optionally, the transceiver unit 1100 sends the second reference signal before receiving the first reference signal, or the transceiver unit 1100 sends the second reference signal when receiving the first reference signal.

Optionally, there is predetermined duration between that the transceiver unit 1100 receives the first reference signal and that the transceiver unit 1100 sends the second reference signal, and the predetermined duration is determined based on a calculating capability of the network device, or is preset.

Optionally, for different subcarrier spacings, preset duration is different.

Optionally, the configuration information for the CSI reporting includes codebook configuration information, and the codebook configuration information is used to indicate a feedback mode of the CSI to the terminal device.

Optionally, the first reference signal is CSI-RS, or the second reference signal is any one of the following: a sounding reference signal SRS, a Doppler tracking reference signal DT-RS, or a phase tracking reference signal PT-RS.

It should be understood that a specific process in which each unit performs the foregoing corresponding step is described in detail in the foregoing method embodiments. For brevity, details are not described herein again.

It should be further understood that when the communication apparatus 1000 is the terminal device, the transceiver unit 1100 in the communication apparatus 1000 may correspond to a transceiver 2020 in a terminal device 2000 shown in FIG. 8, and the processing unit 1200 in the communication apparatus 1000 may correspond to a processor 2010 in the terminal device 2000 shown in FIG. 8.

It should be further understood that when the communication apparatus 1000 is the chip disposed in the terminal device, the transceiver unit 1100 in the communication apparatus 1000 may be an input/output interface.

In another possible design, the communication apparatus 1000 may correspond to the network device in the foregoing method embodiments, for example, may be the network device, or a chip disposed in the network device.

Specifically, the communication apparatus 1000 may correspond to the network device in the method 300 or the method 400 according to the embodiments of this application. The communication apparatus 1000 may include units configured to perform the method performed by the network device in the method 300 in FIG. 3 or the method 400 in FIG. 6. In addition, the units in the communication apparatus 1000 and the foregoing other operations or functions are separately intended to implement corresponding procedures of the method 300 in FIG. 3 or the method 400 in FIG. 6.

In an implementation, the transceiver unit 1100 and the processing unit 1200 may be separately configured to perform the following operations.

The processing unit 1200 is configured to: configure a configuration for CSI reporting, where the configuration for the CSI reporting is associated with configuration information of a first reference signal and configuration information of a second reference signal, the second reference signal is used for measuring an uplink channel, and the first reference signal is used for measuring a downlink channel. The transceiver unit 1100 is configured to send configuration information for the CSI reporting.

In another implementation, the transceiver unit 1100 and the processing unit 1200 may be separately configured to perform the following operations.

The processing unit 1200 is configured to: configure a configuration for CSI reporting, where the configuration for the CSI reporting is associated with configuration information of a first reference signal, the configuration information of the first reference signal is associated with configuration information of a second reference signal, the second reference signal is used for measuring an uplink channel, and the first reference signal is used for measuring a downlink channel. The transceiver unit 1100 is configured to send configuration information for the CSI reporting.

Optionally, the configuration information of the first reference signal is at least one of CSI resource setting CSI resource setting, a first reference resource set, and a first reference signal resource, where the CSI resource setting includes at least one first reference resource set, and the first reference resource set includes at least one first reference signal resource.

Optionally, that the configuration information of the first reference signal is associated with a second reference signal includes: The configuration information of the first reference signal is associated with an identity ID of the second reference signal.

In another implementation, the transceiver unit 1100 and the processing unit 1200 may be separately configured to perform the following operations.

The transceiver unit 1100 is configured to receive a second reference signal. The transceiver unit 1100 is further configured to send a first reference signal, where the first reference signal is a reference signal obtained by the processing unit 1200 by processing channel information, and the channel information is obtained by the processing unit 1200 by performing uplink channel measurement based on the second reference signal. The transceiver unit 1100 is configured to receive CSI, where the CSI is determined by the terminal device through downlink channel measurement based on the first reference signal.

Optionally, the channel information includes angle information or delay information.

In the foregoing possible implementations,
optionally, the transceiver unit 1100 is configured to send a second reference signal based on configuration information of the second reference signal; the transceiver unit 1100 is further configured to receive a first reference signal based on configuration information of the first reference signal, where the first reference signal is a reference signal obtained by a network device by processing channel information, and the channel information is obtained by the network device through uplink channel measurement based on the second reference signal; the processing unit 1200 is specifically configured to measure a downlink channel based on the first reference signal to obtain a channel state of the downlink channel and feed back CSI.

Optionally, a precoding matrix of the first reference signal is obtained by the network device through calculation based on the second reference signal.

Optionally, the second reference signal is periodic, and the first reference signal is periodic, aperiodic, or semi-persistent.

Optionally, the second reference signal is semi-persistent, and the first reference signal is aperiodic or semi-persistent.

Optionally, the second reference signal is aperiodic, and the first reference signal is aperiodic.

Optionally, the first reference signal and the second reference signal are semi-persistent, and
the transceiver unit 1100 is configured to receive first signaling sent by a network device, where the first signaling is used to activate the first reference signal and the second reference signal. Alternatively, the transceiver unit 1100 is configured to receive second signaling sent by a network device, where the second signaling is used to deactivate the first reference signal and the second reference signal.

Optionally, the CSI reporting, the first reference signal, and the second reference signal are all aperiodic, and
the transceiver unit 1100 is configured to receive third signaling sent by the network device, where the third signaling is used to notify the transceiver unit 1100 to report the CSI, the network device to send the first reference signal, and the transceiver unit 1100 to send the second reference signal.

Optionally, the transceiver unit 1100 sends the second reference signal before receiving the first reference signal, or the transceiver unit 1100 sends the second reference signal when receiving the first reference signal.

Optionally, there is predetermined duration between that the transceiver unit 1100 receives the first reference signal and that the transceiver unit 1100 sends the second reference signal, and the predetermined duration is determined based on a calculating capability of the network device, or is preset.

Optionally, for different subcarrier spacings, preset duration is different.

Optionally, the configuration information for the CSI reporting includes codebook configuration information, and the codebook configuration information is used to indicate a feedback mode of the CSI to the terminal device.

Optionally, the first reference signal is CSI-RS, or the second reference signal is any one of the following: a sounding reference signal SRS, a Doppler tracking reference signal DT-RS, or a phase tracking reference signal PT-RS.

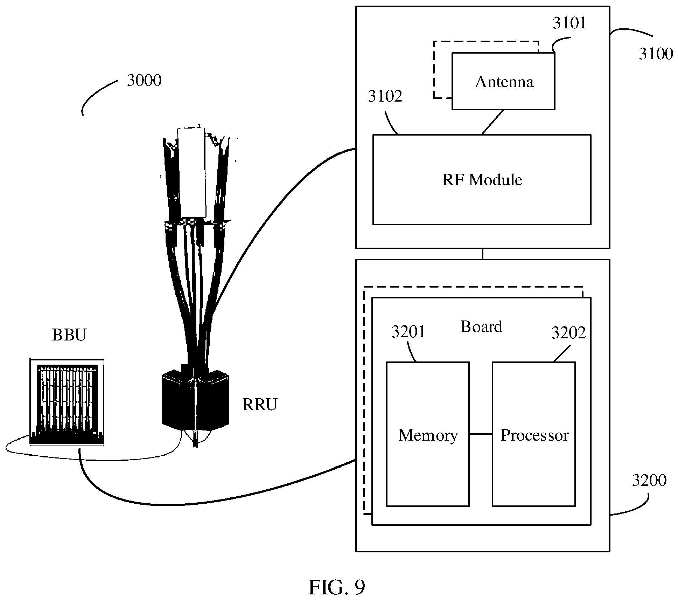

It should be further understood that when the communication apparatus 1000 is the network device, the communication unit in the communication apparatus 1000 may correspond to a transceiver 3200 in a network device 3000 shown in FIG. 9, and the processing unit 1200 in the communication apparatus 1000 may correspond to a processor 3100 in the network device 3000 shown in FIG. 9.

It should be further understood that when the communication apparatus 1000 is the chip disposed in the network device, the transceiver unit 1100 in the communication apparatus 1000 may be an input/output interface.

FIG. 8 is a schematic structural diagram of a terminal device 2000 according to an embodiment of this application. The terminal device 2000 may be applied to the system shown in FIG. 1, to perform functions of the terminal device in the foregoing method embodiments. As shown in the figure, the terminal device 2000 includes the processor 2010 and the transceiver 2020. Optionally, the terminal device 2000 further includes a memory 2030. The processor 2010, the transceiver 2002, and the memory 2030 may communicate with each other through an internal connection path, to transfer a control signal or a data signal. The memory 2030 is configured to store a computer program. The processor 2010 is configured to invoke the computer program in the memory 2030 and run the computer program, to control the transceiver 2020 to receive or send a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may also be integrated into the processor 2010, or may be independent of the processor 2010. The processor 2010 may correspond to the processing unit in FIG. 7.

The transceiver 2020 may correspond to the communication unit in FIG. 7, and may also be referred to as a transceiver unit. The transceiver 2020 may include a receiver (or referred to as a receiver or a receiver circuit) and a transmitter (or referred to as a transmitter or a transmitter circuit). The receiver is configured to receive a signal, and the transmitter is configured to transmit a signal.

It should be understood that the terminal device 2000 shown in FIG. 8 can implement the processes of the terminal device in the method embodiment shown in FIG. 3 or FIG. 6. Operations or functions of the modules in the terminal device 2000 are separately intended to implement corresponding procedures in the foregoing method embodiments. For details, refer to the descriptions in the foregoing method embodiment. To avoid repetition, detailed descriptions are properly omitted herein.

The processor 2010 may be configured to perform an action that is implemented inside the terminal device and that is described in the foregoing method embodiments, and the transceiver 2020 may be configured to perform an action of receiving or sending that is performed by the terminal device from or to the network device and that is described in the foregoing method embodiments. For details, refer to the descriptions in the foregoing method embodiment. Details are not described herein again.

Optionally, the terminal device 2000 may further include a power supply 2050 that is configured to supply power to various devices or circuits in the terminal device.

In addition, to improve functions of the terminal device, the terminal device 2000 may further include one or more of an input unit 2060, a display unit 2070, an audio circuit 2080, a camera 2090, a sensor 2100, and the like, and the audio circuit may further include a loudspeaker 2082, a microphone 2084, and the like.

FIG. 9 is a schematic structural diagram of a network device according to an embodiment of this application, for example, may be a schematic structural diagram of a base station. The base station 3000 may be used in the system shown in FIG. 1, to perform functions of the network device in the foregoing method embodiments. As shown in the figure, the base station 3000 may include one or more radio frequency units, for example, one or more remote radio units (remote radio unit, RRU) 3100, and one or more baseband units (BBU) (which may also be referred to as distributed units (DU)) 3200. The RRU 3100 may be referred to as a transceiver unit, and corresponds to the communication unit 1200 in FIG. 7. Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (or referred to as a receiver or a receiver circuit), and the sending unit may correspond to a transmitter (or referred to as a transmitter or a transmitter circuit). The RRU 3100 is mainly configured to: receive and send a radio frequency signal, and perform conversion between the radio frequency signal and a baseband signal. For example, the RRU 3100 is configured to send configuration information for CSI reporting to a terminal device. The BBU 3200 is mainly configured to: perform baseband processing, control the base station, and the like. The RRU 3100 and the BBU 3200 may be physically disposed together, or may be physically disposed separately; to be specific, the base station is a distributed base station.

The BBU 3200 is a control center of the base station, may be referred to as a processing unit, may correspond to the processing unit 1100 in FIG. 7, and is mainly configured to implement a baseband processing function, for example, channel coding, multiplexing, modulation, or spreading. For example, the BBU (the processing unit) may be configured to control the base station to perform an operation procedure related to the network device in the foregoing method embodiments, for example, to generate the configuration information for the CSI reporting.

In an example, the BBU 3200 may include one or more boards, and a plurality of boards may jointly support a radio access network (such as an LTE network) having a single access standard, or may separately support radio access networks (such as an LTE network, a 5G network, or another network) having different access standards. The BBU 3200 further includes a memory 3201 and a processor 3202. The memory 3201 is configured to store a necessary instruction and necessary data. The processor 3202 is configured to control the base station to perform a necessary action, for example, configured to control the base station to perform the operation procedure of the network device in the foregoing method embodiments. The memory 3201 and the processor 3202 may serve one or more boards. In other words, a memory and a processor may be independently disposed on each board, or a plurality of boards may share a same memory and a same processor. In addition, a necessary circuit may further be disposed on each board.

It should be understood that the base station 3000 shown in FIG. 9 can implement the processes of the network device in the method embodiment in FIG. 3 or FIG. 6. Operations or functions of the modules in the base station 3000 are separately intended to implement corresponding procedures in the foregoing method embodiments. For details, refer to the descriptions in the foregoing method embodiment. To avoid repetition, detailed descriptions are properly omitted herein.

The BBU 3200 may be configured to perform an action that is implemented inside the network device and that is described in the foregoing method embodiments, and the RRU 3100 may be configured to perform an action of receiving or sending that is performed by the network device from or to the terminal device and that is described in the foregoing method embodiments. For details, refer to the descriptions in the foregoing method embodiment. Details are not described herein again.

An embodiment of this application further provides a processing apparatus including a processor and an interface. The processor is configured to perform the communication method in any one of the foregoing method embodiments.

It should be understood that, the processing apparatus may be a chip. For example, the processing apparatus may be a field programmable gate array (field programmable gate array, FPGA), an application-specific integrated circuit (application specific integrated circuit, ASIC), a system-on-a-chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using an instruction in a form of software. The steps of the method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in the embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

According to the method provided in the embodiments of this application, this application further provides a computer program product. The computer program product includes computer program code. When the computer program code is run on a computer, the computer is enabled to perform the method in any one of the embodiments shown in FIG. 3 to FIG. 6.

According to the method provided in the embodiments of this application, this application further provides a computer-readable medium. The computer-readable medium stores program code. When the program code is run on a computer, the computer is enabled to perform the method in any one of the embodiments shown in FIG. 3 to FIG. 6.

According to the method provided in the embodiments of this application, this application further provides a system. The system includes the foregoing one or more terminal devices and the foregoing one or more network devices.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments exactly correspond to the network device and the terminal device in the method embodiments. A corresponding module or unit performs a corresponding step. For example, a communication unit (a transceiver) performs a receiving step or a sending step in the method embodiments, and a processing unit (a processor) may perform another step other than the sending step and the receiving step. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, or a computer. As shown in figures, both a computing device and an application that runs on a computing device may be components. One or more components may reside within a process or a thread of execution, and a component may be located on one computer or distributed between two or more computers. In addition, these components may be executed from various computer-readable media that store various data structures. For example, the components may communicate by using a local or remote process and according to, for example, a signal having one or more data packets (for example, data from two components interacting with another component in a local system, a distributed system, or across a network such as the internet interacting with other systems by using the signal).

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for configuring channel state information CSI reporting, comprising:
receiving, by a terminal device, configuration information for CSI reporting, wherein the configuration information for the CSI reporting is associated with configuration information of a first reference signal and configuration information of a second reference signal, the second reference signal is used for measuring an uplink channel, and the first reference signal is used for measuring a downlink channel; and
performing, by the terminal device, channel measurement based on the first reference signal and the second reference signal, and feeding back CSI.

2. A method for configuring channel state information CSI reporting, comprising:
receiving, by a terminal device, configuration information for CSI reporting, wherein the configuration information for the CSI reporting is associated with configuration information of a first reference signal, the configuration information of the first reference signal is associated with a second reference signal, the second reference signal is used for measuring an uplink channel, and the first reference signal is used for measuring a downlink channel; and
performing, by the terminal device, channel measurement based on the first reference signal and the second reference signal, and feeding back CSI.

3. The method according to claim 1 or 2, wherein
the configuration information of the first reference signal is at least one of a CSI resource setting CSI resource setting, a first reference resource set, and a first reference signal resource, wherein
the CSI resource setting comprises at least one first reference resource set, and the first reference resource set comprises at least one first reference signal resource.

4. The method according to claim 2 or 3, wherein that the configuration information of the first reference signal is associated with a second reference signal comprises:
the configuration information of the first reference signal is associated with an identity ID of the second reference signal.

5. The method according to any one of claims 1 to 4, wherein the performing, by the terminal device, channel measurement based on the first reference signal and the second reference signal, and feeding back CSI comprises:
sending, by the terminal device, the second reference signal based on the configuration information of the second reference signal;
receiving, by the terminal device, the first reference signal based on the configuration information of the first reference signal, wherein the first reference signal is a reference signal obtained by a network device by processing channel information, and the channel information is obtained by the network device through uplink channel measurement based on the second reference signal; and
performing, by the terminal device, channel measurement based on the first reference signal, and feeding back the CSI.

6. A channel state information CSI sending method, comprising:
sending, by a terminal device, a second reference signal used for measuring an uplink channel;
receiving, by the terminal device, a first reference signal, wherein the first reference signal is a reference signal obtained by a network device by processing channel information, and the channel information is obtained by the network device through uplink channel measurement based on the second reference signal;
measuring, by the terminal device, a downlink channel based on the first reference signal, to obtain a channel state of the downlink channel; and
sending, by the terminal device, CSI based on the channel state of the downlink channel.

7. The method according to claim 6, wherein the channel information comprises angle information or delay information.

8. The method according to any one of claims 1 to 7, wherein
a precoding matrix of the first reference signal is obtained by the network device through calculation based on the second reference signal.

9. The method according to any one of claims 1 to 8, wherein the second reference signal is periodic and the first reference signal is periodic, aperiodic, or semi-persistent.

10. The method according to any one of claims 1 to 8, wherein the second reference signal is semi-persistent and the first reference signal is aperiodic or semi-persistent.

11. The method according to any one of claims 1 to 8, wherein the second reference signal is aperiodic and the first reference signal is aperiodic.

12. The method according to any one of claims 1 to 8, wherein the first reference signal and the second reference signal are semi-persistent; and
the method further comprises:
receiving, by the terminal device, first signaling sent by the network device, wherein the first signaling is used to activate the first reference signal and the second reference signal; or
receiving, by the terminal device, second signaling sent by the network device, wherein the second signaling is used to deactivate the first reference signal and the second reference signal.

13. The method according to any one of claims 1 to 8, wherein the CSI reporting, the first reference signal, and the second reference signal are all aperiodic; and
the terminal device receives third signaling sent by the network device, wherein the third signaling is used to notify the terminal device to report the CSI, the network device to send the first reference signal, and the terminal device to send the second reference signal.

14. The method according to any one of claims 1 to 13, wherein the method further comprises:
sending, by the terminal device, the second reference signal before receiving the first reference signal; or sending, by the terminal device, the second reference signal when receiving the first reference signal.

15. The method according to claim 14, wherein
there is predetermined duration between receiving of the first reference signal by the terminal device and sending of the second reference signal by the terminal device, and the predetermined duration is determined based on a capability, of the network device, of calculating the precoding matrix, or is preset.

16. The method according to claim 15, wherein the predetermined duration is set to different values for different subcarrier spacings.

17. The method according to any one of claims 1 to 16, wherein the configuration information for the CSI reporting comprises codebook configuration information, and the codebook configuration information is used to indicate a feedback mode of the CSI to the terminal device.

18. The method according to any one of claims 1 to 17, wherein
the first reference signal is a channel state information reference signal CSI-RS; or
the second reference signal is any one of the following: a sounding reference signal SRS, a Doppler tracking reference signal DT-RS, or a phase tracking reference signal PT-RS.

19. A communication apparatus, comprising a processing unit and a transceiver unit, wherein
the transceiver unit is configured to receive configuration information for CSI reporting, wherein the configuration information for the CSI reporting is associated with configuration information of a first reference signal and configuration information of a second reference signal, the second reference signal is used for measuring an uplink channel, and the first reference signal is used for measuring a downlink channel; and
the processing unit is configured to perform channel measurement based on the first reference signal and the second reference signal, and feed back CSI.

20. A communication apparatus, comprising a processing unit and a transceiver unit, wherein
the transceiver unit is configured to receive configuration information for CSI reporting, wherein the configuration information for the CSI reporting is associated with configuration information of a first reference signal, the configuration information of the first reference signal is associated with a second reference signal, the second reference signal is used for measuring an uplink channel, and the first reference signal is used for measuring a downlink channel; and
the processing unit is configured to perform channel measurement based on the first reference signal and the second reference signal, and feed back CSI.

21. The communication apparatus according to claim 19 or 20, wherein
the configuration information of the first reference signal is at least one of a CSI resource setting CSI resource setting, a first reference resource set, and a first reference signal resource, wherein
the CSI resource setting comprises at least one first reference resource set, and the first reference resource set comprises at least one first reference signal resource.

22. The communication apparatus according to claim 20 or 21, wherein that the configuration information of the first reference signal is associated with a second reference signal comprises:
the configuration information of the first reference signal is associated with an identity ID of the second reference signal.

23. The communication apparatus according to any one of claims 19 to 22, wherein
the transceiver unit is further configured to send the second reference signal based on the configuration information of the second reference signal;
the transceiver unit is further configured to receive the first reference signal based on the configuration information of the first reference signal, wherein the first reference signal is a reference signal obtained by a network device by processing channel information, and the channel information is obtained by the network device through uplink channel measurement based on the second reference signal; and
the communication apparatus performs channel measurement based on the first reference signal, and feeds back the CSI.

24. A communication apparatus, comprising a processing unit and a transceiver unit, wherein
the transceiver unit is configured to send a second reference signal used for measuring an uplink channel;
the transceiver unit is further configured to receive a first reference signal, wherein the first reference signal is a reference signal obtained by a network device by processing channel information, and the channel information is obtained by the network device through uplink channel measurement based on the second reference signal;
the processing unit is configured to measure a downlink channel based on the first reference signal, to obtain a channel state of the downlink channel; and
the transceiver unit is further configured to send CSI based on the channel state of the downlink channel.

25. The communication apparatus according to claim 24, wherein the channel information comprises angle information or delay information.

26. The communication apparatus according to any one of claims 19 to 25, wherein
a precoding matrix of the first reference signal is obtained by the network device through calculation based on the second reference signal.

27. The communication apparatus according to any one of claims 19 to 26, wherein the second reference signal is periodic and the first reference signal is periodic, aperiodic, or semi-persistent.

28. The communication apparatus according to any one of claims 19 to 26, wherein the second reference signal is semi-persistent and the first reference signal is aperiodic or semi-persistent.

29. The communication apparatus according to any one of claims 19 to 26, wherein the second reference signal is aperiodic and the first reference signal is aperiodic.

30. The communication apparatus according to any one of claims 19 to 26, wherein the first reference signal and the second reference signal are semi-persistent; and
the transceiver unit is further configured to:
receive first signaling sent by the network device, wherein the first signaling is used to activate the first reference signal and the second reference signal; or
receive second signaling sent by the network device, wherein the second signaling is used to deactivate the first reference signal and the second reference signal.

31. The communication apparatus according to any one of claims 19 to 26, wherein the CSI reporting, the first reference signal, and the second reference signal are all aperiodic; and
the transceiver unit is further configured to receive third signaling sent by the network device, wherein the third signaling is used to notify the communication apparatus to report the CSI, the network device to send the first reference signal, and the communication apparatus to send the second reference signal.

32. The communication apparatus according to any one of claims 19 to 31, wherein
the transceiver unit sends the second reference signal before receiving the first reference signal, or the transceiver unit sends the second reference signal when receiving the first reference signal.

33. The communication apparatus according to claim 32, wherein
there is predetermined duration between receiving of the first reference signal by the transceiver unit and sending of the second reference signal by the transceiver unit, and the predetermined duration is determined based on a capability, of the network device, of calculating the precoding matrix, or is preset.

34. The communication apparatus according to claim 33, wherein the predetermined duration is set to different values for different subcarrier spacings.

35. The communication apparatus according to any one of claims 19 to 34, wherein the configuration information for the CSI reporting comprises codebook configuration information, and the codebook configuration information is used to indicate a feedback mode of the CSI to the communication apparatus.

36. The communication apparatus according to any one of claims 19 to 35, wherein
the first reference signal is a channel state information reference signal CSI-RS; or
the second reference signal is any one of the following: a sounding reference signal SRS, a Doppler tracking reference signal DT-RS, or a phase tracking reference signal PT-RS.

37. A terminal device, comprising a transceiver and a processor, wherein
the transceiver is configured to receive configuration information for CSI reporting, wherein the configuration information for the CSI reporting is associated with configuration information of a first reference signal and configuration information of a second reference signal, the second reference signal is used for measuring an uplink channel, and the first reference signal is used for measuring a downlink channel; and
the processor is configured to perform channel measurement based on the first reference signal and the second reference signal, and feed back CSI.

38. A terminal device, comprising a processor and a transceiver, wherein
the transceiver is configured to receive configuration information for CSI reporting, wherein the configuration information for the CSI reporting is associated with configuration information of a first reference signal, the configuration information of the first reference signal is associated with a second reference signal, the second reference signal is used for measuring an uplink channel, and the first reference signal is used for measuring a downlink channel; and
the processor is configured to perform channel measurement based on the first reference signal and the second reference signal, and feed back CSI.

39. The terminal device according to claim 37 or 38, wherein
the configuration information of the first reference signal is at least one of a CSI resource setting CSI resource setting, a first reference resource set, and a first reference signal resource, wherein
the CSI resource setting comprises at least one first reference resource set, and the first reference resource set comprises at least one first reference signal resource.

40. The terminal device according to claim 38 or 39, wherein that the configuration information of the first reference signal is associated with a second reference signal comprises:
the configuration information of the first reference signal is associated with an identity ID of the second reference signal.

41. The terminal device according to any one of claims 37 to 40, wherein
the transceiver is further configured to send the second reference signal based on the configuration information of the second reference signal;
the transceiver is further configured to receive the first reference signal based on the configuration information of the first reference signal, wherein the first reference signal is a reference signal obtained by a network device by processing channel information, and the channel information is obtained by the network device through uplink channel measurement based on the second reference signal; and
the terminal device performs channel measurement based on the first reference signal, and feeds back the CSI.

42. A terminal device, comprising a processor and a transceiver, wherein
the transceiver is configured to send a second reference signal used for measuring an uplink channel;
the transceiver is further configured to receive a first reference signal, wherein the first reference signal is a reference signal obtained by a network device by processing channel information, and the channel information is obtained by the network device through uplink channel measurement based on the second reference signal;
the processor is configured to measure a downlink channel based on the first reference signal, to obtain a channel state of the downlink channel; and
the transceiver is further configured to send CSI based on the channel state of the downlink channel.

43. The terminal device according to claim 42, wherein the channel information comprises angle information or delay information.

44. The terminal device according to any one of claims 37 to 43, wherein
a precoding matrix of the first reference signal is obtained by the network device through calculation based on the second reference signal.

45. The terminal device according to any one of claims 37 to 44, wherein the second reference signal is periodic and the first reference signal is periodic, aperiodic, or semi-persistent.

46. The terminal device according to any one of claims 37 to 44, wherein the second reference signal is semi-persistent and the first reference signal is aperiodic or semi-persistent.

47. The terminal device according to any one of claims 37 to 44, wherein the second reference signal is aperiodic and the first reference signal is aperiodic.

48. The terminal device according to any one of claims 37 to 44, wherein the first reference signal and the second reference signal are semi-persistent; and
the transceiver is further configured to:
receive first signaling sent by the network device, wherein the first signaling is used to activate the first reference signal and the second reference signal; or
receive second signaling sent by the network device, wherein the second signaling is used to deactivate the first reference signal and the second reference signal.

49. The terminal device according to any one of claims 37 to 44, wherein the CSI reporting, the first reference signal, and the second reference signal are all aperiodic; and
the transceiver is further configured to receive third signaling sent by the network device, wherein the third signaling is used to notify the terminal device to report the CSI, the network device to send the first reference signal, and the terminal device to send the second reference signal.

50. The terminal device according to any one of claims 37 to 49, wherein
the transceiver sends the second reference signal before receiving the first reference signal, or the transceiver sends the second reference signal when receiving the first reference signal.

51. The terminal device according to claim 50, wherein
there is predetermined duration between receiving of the first reference signal by the transceiver and sending of the second reference signal by the transceiver, and the predetermined duration is determined based on a capability, of the network device, of calculating the precoding matrix, or is preset.

52. The terminal device according to claim 51, wherein the predetermined duration is set to different values for different subcarrier spacings.

53. The terminal device according to any one of claims 37 to 52, wherein the configuration information for the CSI reporting comprises codebook configuration information, and the codebook configuration information is used to indicate a feedback mode of the CSI to the terminal device.

54. The terminal device according to any one of claims 37 to 53, wherein
the first reference signal is a channel state information reference signal CSI-RS; or
the second reference signal is any one of the following: a sounding reference signal SRS, a Doppler tracking reference signal DT-RS, or a phase tracking reference signal PT-RS.

55. A chip, comprising at least one processor and an interface, wherein
the interface is configured to receive configuration information for CSI reporting, wherein the configuration information for the CSI reporting is associated with configuration information of a first reference signal and configuration information of a second reference signal, the second reference signal is used for measuring an uplink channel, and the first reference signal is used for measuring a downlink channel; and
the processor is configured to perform channel measurement based on the first reference signal and the second reference signal, and feed back CSI.

56. A chip, comprising at least one processor and an interface, wherein
the interface is configured to receive configuration information for CSI reporting, wherein the configuration information for the CSI reporting is associated with configuration information of a first reference signal, the configuration information of the first reference signal is associated with a second reference signal, the second reference signal is used for measuring an uplink channel, and the first reference signal is used for measuring a downlink channel; and
the processor is configured to perform channel measurement based on the first reference signal and the second reference signal, and feed back CSI.

57. A chip, comprising at least one processor and an interface, wherein
the interface is configured to send a second reference signal used for measuring an uplink channel;
the interface is further configured to receive a first reference signal, wherein the first reference signal is a reference signal obtained by a network device by processing channel information, and the channel information is obtained by the network device through uplink channel measurement based on the second reference signal;
the processor is configured to measure a downlink channel based on the first reference signal, to obtain a channel state of the downlink channel; and
the interface is further configured to send CSI based on the channel state of the downlink channel.

58. A computer-readable storage medium, wherein the computer-readable storage medium stores program instructions; and when the program instructions are run on a processor, the method according to any one of claims 1 to 18 is performed.

59. A computer program product, wherein when the computer program product runs on a communication apparatus, the communication apparatus is enabled to perform the method according to any one of claims 1 to 18.
